# EUROPEAN PATENT SPECIFICATION

(11) **EP 0 408 744 B1**
(45) Date of publication and mention of the grant of the patent: **04.06.1997**
(21) Application number: 89902076.2
(22) Date of filing: 03.02.1989
(51) Int. Cl.: B60P 1/32, B60P 3/07

(54) **CAR CARRIER TRUCK USED ALSO AS DUMP TRUCK**
TRANSPORTWAGEN FÜR FAHRZEUGE, AUCH ANWENDBAR FÜR KIPPLASTWAGEN
CAMION TRANSPORTANT DES VOITURES UTILISABLE EGALEMENT COMME CAMION A BENNE BASCULANTE

(43) Date of publication of application: 23.01.1991
(73) Proprietor: KYOKUTO KAIHATSU KOGYO CO., LTD., Nishinomiya-shi Hyogo-ken (JP)
(72) Inventor: MURATA, Masaichi, Kyokuto Kaihatsu Kogyo Co.Ltd, Nishinomiya-shi Hyogo 663 (JP); KURIYAMA, Hiroaki, Kyokuto Kaihatsu Kogyo Co., Ltd, Nishinomiya-shi Hyogo 663 (JP); MAEDA, Yoshiyuki, Kyokuto Kaihatsu Kogyo Co. Ltd., Nishinomiya-shi Hyogo 663 (JP); YAMASHITA, Megumi, Kyokuto Kaihatsu Kogyo Co.,Ltd., Nishinomiya-shi Hyogo 663 (JP); UEDA, Kouzou, Kyokuto Kaihatsu Kogyo Co.,Ltd., Yamato-shi Kanagawa 242 (JP)
(74) Representative: Glawe, Delfs, Moll & Partner
(86) International application number: JP8900116
(87) International publication number: WO9008672

(56) References cited:
- CA-A- 990 762
- FR-A- 2 167 718
- FR-A- 2 271 068
- FR-A- 2 641 743
- JP-B-52 022 166
- JP-U-63 021 158
- JP-Y-55 051 628
- JP-Y-61 037 546

## Description

### FIELD OF TECHNOLOGY

The present invention is used in a field of car carrier trucks which are also utilized as dump trucks which fully tilt their load-carrying platforms and which effect loading and unloading of cars by longitudinally moving the load-carrying platform after tilting of the load-carrying platform at a predetermined angle.

### BACKGROUND OF THE INVENTION

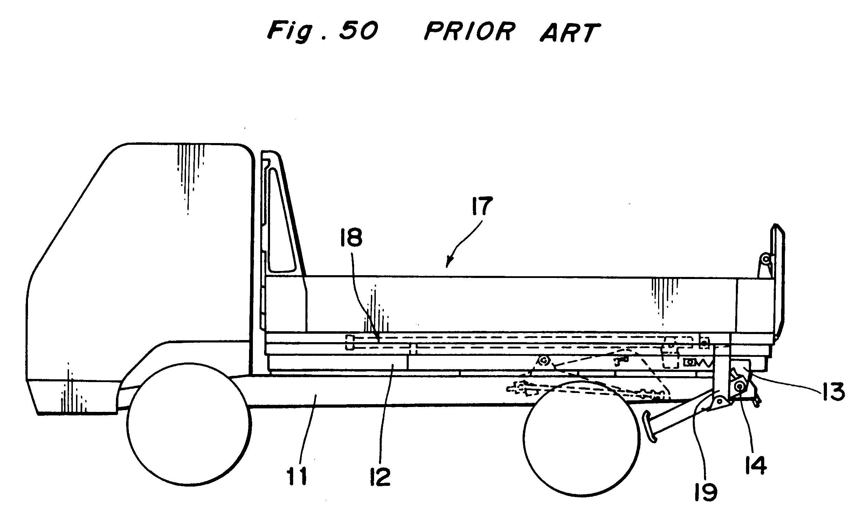

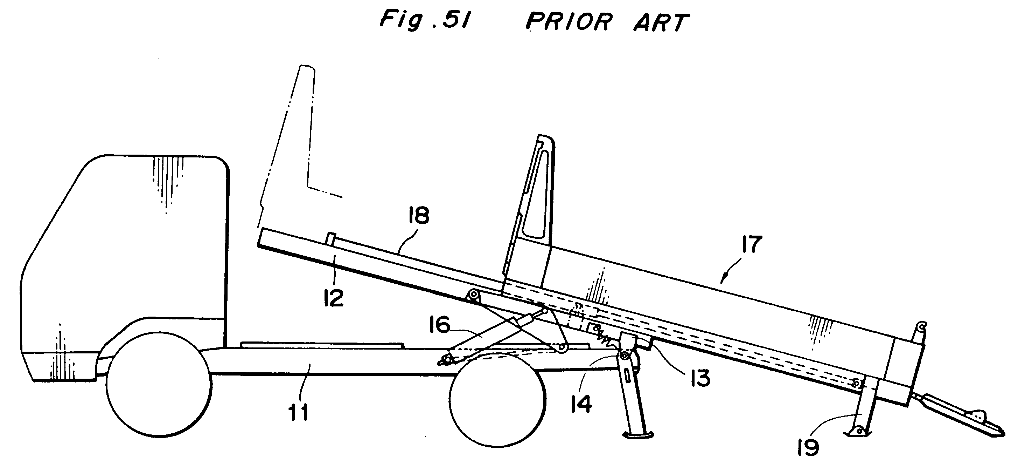

Such car carrier trucks, according to the features of the preamble of independent claim 1, and which are generally known, are shown as an example in Figs. 50 and 51.

Referring to Figs. 50 and 51, a reference numeral 11 indicates a chassis and there is provided a dump frame 12 on the chassis 11.

At the rear end of the dump frame 12, there is provided a hinge bracket 13. The hinge bracket 13 is pivotably connected to the chassis 11 through a hinge shaft 14. Furthermore, a tilt cylinder 16 is provided between the chassis 11 and the dump frame 12, so that the dump frame 12 is tilted through elongation of the tilt cylinder 16.

On the dump frame 12 is mounted a cargo container 17 for carrying vehicles. A slide cylinder 18 is longitudinally provided between the dump frame 12 and the cargo container 17. Elongation of the slide cylinder 18 slides the cargo container 17 backward.

When the cargo container is slid backward, cargo container support legs 19 for the cargo container reach the ground to support the cargo container 17.

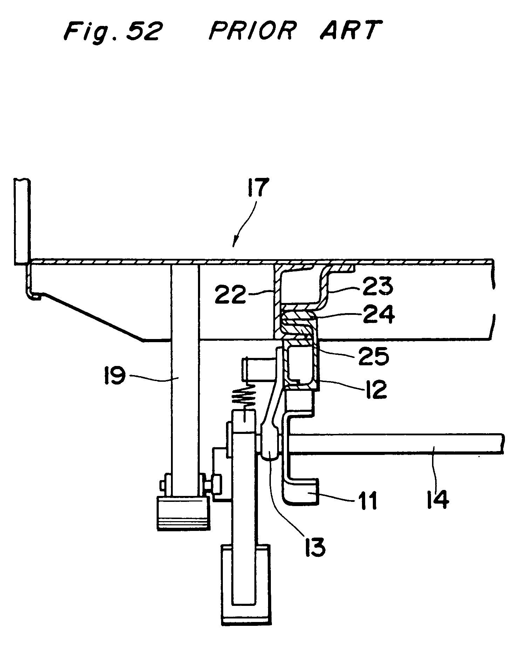

Conventionally, in order to insure that the cargo container 17 smoothly slides on the dump frame 12 without being derailed therefrom, an upper part of the dump frame 12 is inserted, as shown in Fig. 52, between a sectionally U-shaped main girder 22 mounted on the bottom of the cargo container 17 in the longitudinal direction and a subsidiary girder 23 provided inside of the main girder 22, and an upper sliding pad 24 and a lower sliding pad 25 are fastened respectively to the upper and lower surfaces of the upper part of the dump frame 12 with bolts so that the subsidiary girder 23 is slidably supported on the upper sliding pad 24 and a lower portion of the main girder 22 slidably rests on the lower sliding pad 25.

Meanwhile, in such a conventional pad mounting structure, the upper and lower sliding pads 24 and 25 are fastened to the dump frame 12 with bolts. However, because the bolt fastening work for the lower sliding pad 25 is done in a narrow space, positioning of holes is difficult and therefore the mounting operation or the replacing operation of the lower sliding pad 25 is difficult, which is a problem.

Therefore, it is the object of of the present invention to provide a sliding pad mounting structure of a car carrier truck in which the mounting and replacement of a lower sliding pad is easy.

This object is achieved by a truck usable as a car carrier truck and as a dump truck according to the characterising part of claim 1. The dependent claims are releated to further advantagous developments of the present invention.

Furthermore, the above-described conventional car carrier truck has the following problems. Namely, the vertical distance between the load-carrying platform and the dump frame increases by the diameter of the cylinder, and consequently, increase in height of the load-carrying platform taking the form of a cargo container is inevitable. As a result, in tilting the dump frame backward and sliding the load-carrying platform backward to bring it into contact with the ground, the tilt angle becomes large, resulting in that the slope of the load-carrying platform becomes steep and therefore difficult for construction vehicles to go up.

Moreover, although the distance between the load-carrying platform and the dump frame can be shortened by notching a traverse girder at a portion where the cylinder device is located, this causes a problem of lowering the strength of the load-carrying platform.

Therefore, a second advantage of the present invention is, in a car carrier truck which has a load-carrying platform supported on a sufficiently strong dump frame such that the load-carrying platform can be slid back and forth by a cylinder device, to prevent the tilt angle of the load-carrying platform from being too large when the dump frame is tilted, by making small the height of the load-carrying platform from the ground.

Furthermore, in the car carrier truck which loads vehicles by sliding the cargo container backward, individual support legs are provided respectively to the chassis and the cargo container in order to securely support the chassis and cargo container during the loading and unloading of vehicles. Because these support legs, particularly those provided on the chassis make an obstacle to running of the truck if stretched out, they are conventionally retracted by an operator during the driving.

However, such retracting work has to be performed by entering below the cargo container and such a hard work is forced upon a worker.

Therefore, a third advantage of the present invention is to effect an automatic stretching-out and retracting of the chassis support legs through the sliding operation of the cargo container, thus eliminating the need of a work of an operator entering below the cargo container so as to perform the stretching-out and retracting safely and securely.

Furthermore, a fourth advantage of the present invention is to prevent failure of springs forcing the chassis-supporting legs by prohibiting the springs, even though the load-carrying platform is fully tilted, from being elongated more than the elongation made when the chassis supporting legs are retracted.

A fifth advantage of the present invention is to securely fasten the cargo container to the dump frame during a travel and also to automatically fasten the cargo container to the dump frame after completion of loading or unloading of vehicles.

A sixth advantage of the present invention is to provide a car carrier truck used also as a dump truck which is capable of using a rear hinged door securely as a foot board without dropping off at the time of loading or unloading of vehicles, and also capable of fastening the cargo container to the dump frame and securely dumping loaded items without possibility of the turnover of the truck in the dumping operation.

A seventh advantage of the present invention is to secure a clearance between the cargo container and the chassis by providing a stopper member either on a lower surface of the cargo container or on an upper surface of the chassis in order to prevent the piping passing through a space between front and rear wooden supports fastened onto the chassis from being damaged.

Meanwhile, in the truck as shown in Figs. 50 and 51, since the main girders 22 extending longitudinally on the bottom face of the cargo container 17 are in direct sliding contact with the dump frame 12, the back and forth movements of the cargo container 17 can not be effected smoothly because of a large sliding resistance. A clearance is provided between respective side surfaces of the dump frame 12 and the main girder 22 so that both side surfaces do not contact each other in order to reduce the sliding resistance. For this reason, rolling takes place during the back or forth movement of the cargo container, and particularly when the cargo container is moved backward, that portion supported by the dump frame 12 of the main girder 22 becomes shorter and the rolling becomes larger. Then, there is a danger that vehicles on the cargo container will slide down on the cargo container by their own weights.

Accordingly, an eighth advantage of the present invention is to enable smooth back and forth movements of the load-carrying platform with the aid of a moving pad provided on the cargo container, namely, on the load-carrying platform and a fixed pad provided on the dump frame, and also to prevent the rolling of the load-carrying platform at all times with the aid of the moving pad and a rear fixed pad.

Furthermore, there has been known a car carrier truck used also as a dump truck which has a locking device provided between a dump frame and a load-carrying platform, wherein in case that the truck is used as a dump truck, the locking device is brought into a locking state such that the load-carrying platform is fully tilted integrally with the dump frame, while in case that the truck is used as a car carrier truck, the locking device is brought into an unlocking state such that after the dump frame is tilted by a predetermined angle, the load-carrying platform is moved back and forth for loading or unloading vehicles.

However, in such an arrangement, the locking device must be changed over to the locking or unlocking state in accordance with each job. Particularly in case that the truck is used as a dump truck, if a full tip is effected without changing over the locking device to the locking state, there is a danger that the load-carrying platform will drop from the dump frame and hurt a worker.

Therefore, a ninth advantage of the present invention is to provide a car carrier-truck used also as a dump truck wherein the locking device is provided with a lock detection means, and a full-tipping operation is allowed only when a locking state of the locking device is detected by the lock detection means.

A tenth advantage of the present invention is to provide a car carrier truck used also as a dump truck wherein when the tilt of the load-carrying platform is below a predetermined lower limit, back and forth movements of the load-carrying platform are restrained and when a predetermined upper limit is reached, the load-carrying platform is not allowed to be tilted more, thereby the back and forth moving operation of the load-carrying platform only within a predetermined range of the tilt angle is ensured.

An eleventh advantage of the present invention is to enable operations to be controlled inside a cab when the dump and car carrier truck is used as a dump truck and, on the other hand, to enable operations to be controlled outside the cab with safety being confirmed when the truck is used as a car carrier truck.

With the construction according to claim 1, the following operation is obtained.

The upper sliding pad fastened on the upper surface of the horizontal portion of the dump frame, which has the vertical and horizontal portions and which is tiltably provided on the chassis, supports the cargo container in such a manner that the cargo container can slide on the upper sliding pad. The lower sliding pad fitted between the stoppers fastened on the upper surface of the horizontal portion of the main girder, which longitudinally extends on the bottom surface of the cargo container, is stopped in the longitudinal direction by the stoppers and slides relative to the lower surface of the horizontal portion of the dump frame.

Furthermore, as is clear from the above description, since the lower sliding pad is not fastened with bolts like in the conventional case, but is fitted between stoppers fixed on the lower horizontal portion of the main girder, installation and replacement of the lower sliding pad can be done readily.

In order to achieve the second advantage of the present invention, in a car carrier truck having a dump frame tiltably supported on a chassis frame, and a load-carrying platform supported on the dump frame in such a manner that the load-carrying platform can be slid back and forth by a cylinder device, the car carrier truck comprises a pair of right and left main girders longitudinally extending on a back surface of the load-carrying platform; traverse girders connected to each of the main girders, intersecting perpendicularly to the main girders; and an subsidiary girder which longitudinally extends connecting center-side end portions of the traverse girders between the main girders; wherein the subsidiary girder has an upward recess portion formed in a central portion of the subsidiary girder and the cylinder device is disposed in the recess portion.

The car carrier truck of the above constitution slides the load-carrying platform backward by extending the cylinder device, and tilts the dump frame till the rear end of the load-carrying platform is put on the ground. In this state, it is possible to load the truck with construction vehicles and the like from the rear end of the load-carrying platform.

In this case, since the center-side end portions of the traverse girders are connected by the subsidiary girder having the recess in its lower portion, and in this recess is arranged the cylinder device for longitudinally moving the load-carrying platform, the distance between the dump frame and the load-carrying platform becomes smaller and therefore an elevation of the load-carrying platform becomes lower. Thereby, a good stability of the truck is obtained and moreover a tilt angle of the load-carrying platform becomes smaller when the rear end of the load-carrying platform is contacted to the ground. Furthermore, since strength of the traverse girders does not deteriorate, strength of the load-carrying platform is not impaired, either.

In order to achieve the third advantage, in a car carrier truck wherein a dump frame is tiltably provided on a chassis, and a cargo container is provided on the dump frame slidably backward, the car carrier truck is characterized in that chassis support legs are pivotably supported by the chassis at rear portions of the chassis so as to be able to swing back and forth; cargo container support legs are provided at rear portions of the cargo container perpendicularly to the cargo container; the chassis support legs are forced at all times by spring members in a protruding direction of the chassis support legs, and are held in a protruding condition by stopper members provided on the chassis; one of the cargo container support leg and the chassis support leg is provided with a guide piece; and the other of the cargo container support leg and the chassis support leg is provided with a control member for engaging with the guide piece and retracting the chassis support leg forward when the cargo container slides forward.

The car carrier truck of the above constitution operates as follows.

When the cargo container is slid backward after being tilted for the loading or unloading of vehicles, the chassis support legs which are held in a retracted state by the cargo container support legs at an initial stage of the sliding movement are released from the retracted state, and become protruded by the force of the spring means.

Thereafter, when the cargo container is slid further backward, the cargo container support legs reaches the ground. As a result, the cargo container and the chassis are supported by the respective support legs.

Next, when the cargo container is slid forward, the control members come into contact with the guide pieces at a final stage of the sliding movement and cause the chassis support legs to turn forward and retract against the force of the spring means, whereby the chassis support legs are held in the retracted state.

As described above, according to the present invention, since the protruding and retracting of the chassis support legs is effected automatically by the sliding motion of the cargo container, it becomes absolutely unnecessary for an operator to enter below the cargo container for the operation. In addition, the protruding and retracting operation of the support legs can be effected safely and securely.

Furthermore, since the chassis support legs come to a completely protruding state at the initial stage of the cargo container's backward sliding movement and are returned to the retracted state at the final stage of the cargo container's forward movement, it is possible to rotate the chassis support legs in a usual height condition of the chassis in which the chassis rear end does not fall because of vehicles loaded. Accordingly, it is possible to securely make the support legs protrude and retract.

In order to achieve the fourth advantage, in a car carrier truck used also as a dump truck wherein a dump frame is provided on a chassis tiltably through hinge brackets, and a load-carrying platform is provided on the dump frame in such a manner as to be able to longitudinally move, the truck of the present invention is characterized in that chassis support legs are provided at rear portions of the chassis in such a manner that each chassis support leg has the same center of rotation that the hinge bracket has; the chassis support legs are provided with respective guide pieces and are also provided with respective springs each of which is provided between each hinge bracket and the dump frame so as to urge the chassis support leg in a direction in which the chassis support leg protrudes; load-carrying platform support legs are provided at rear portions of the load-carrying platform perpendicularly to the load-carrying platform; the load carrying platform support legs are provided with respective engagement members which are engaged with the respective guide pieces and turn the respective chassis support legs in a direction in which the chassis support legs are retracted; and a stopper member is provided at a rear portion of the chassis for restraining the chassis support legs from turning when the chassis support legs are in their protruding positions.

The truck of the above constitution operates as follows.

In the case of loading or unloading of vehicles, after tilting the dump frame by a predetermined angle, the load-carrying platform is moved backward and the load-carrying platform support legs are stood on the ground, so that the loading or unloading of vehicles is effected. Because the load-carrying platform support legs move backward at the movement of the load-carrying platform, the engagement members engaged with the guide pieces on the chassis support legs are disengaged from the same and turned to their protruding positions, urged by the springs, till the chassis support legs come into contact with the stopper member to stop.

On the other hand, in the case of using the truck as a dump truck, the load-carrying platform is fully tipped with its top forward portion fixed. In this case, though the chassis support legs are rotated farther from the retracted position by the turning of the load-carrying platform support legs, because the hinge brackets or dump frame holding the springs turn integrally, the expansion of the springs is hardly changed.

As described above, according to the present invention, the protruding and retracting actions of the chassis support legs can be automatically effected by the longitudinal movement of the load-carrying platform, and in the case of the full tip of the load-carrying platform, the springs are hardly expanded more than when the chassis support legs are in the retracted state, and thereby the spring failure can be prevented.

Also, in order to achieve the fifth advantage, in a car carrier truck wherein a dump frame is tiltably provided on a chassis and a cargo container is provided on the dump frame slidably backward, the car carrier truck of the present invention is characterized in that the cargo container is provided with a backward slide prevention means and an operation means for releasing the backward slide prevention means; and the dump frame is provided with a control means for changing over the backward slide prevention means to an engagement direction when the cargo container slides forward.

The car carrier truck of the above construction operates as follows.

First, when vehicles container are discharged from the cargo, the control means is operated to release the backward slide prevention means, and under this condition the dump frame is tilted by a predetermined angle. Thereafter, the cargo container is slidingly moved backward. When the sliding movement is finished, the vehicles are driven down to the ground, thereby being unloaded from the cargo container.

On the other hand, when vehicles are loaded into the cargo container, vehicles are driven into the cargo container in the above final state and then the cargo container is slid forward. In this case, at a final stage of the forward sliding movement of the cargo container, the operation means is automatically changed over by the control means so that the backward slide prevention means becomes engaged.

When the slide of the cargo container is completed, the dump frame is lowered to bring the cargo container into the retracted state.

As is clear from the above description, since the truck according to the present invention is provided with backward slide prevention means for stopping the backward slide of the cargo container and operation means for releasing the prevention means from its operation, and is further provided with control means for bringing the backward slide prevention means back to the original condition from the released condition during the forward sliding movement of the cargo container, it is possible to keep the cargo container securely fastened to the dump frame during a run of the truck. It is also possible to automatically fasten the cargo container to the dump frame after completion of the loading and unloading operation. Thus, accidents due to a failure to fasten the cargo container to the dump frame by mistake can be avoided.

Furthermore, in order to accomplish the sixth advantage, in a car carrier truck used also as a dump truck wherein a dump frame is tiltably provided on a chassis and a cargo container is provided on the dump frame slidably backward, and wherein when the cargo container slides backward, a tailgate of the cargo container can be used as a footboard, and is opened on a lower side by an automatic opening and closing device when the cargo container is tilted by more than a predetermined angle in a dump operation, the truck is characterized in that a backward slide prevention means for preventing the cargo container from sliding backward is provided between the cargo container and the dump frame; and the cargo container is provided with a tailgate locking means interlocked with the backward slide prevention means so that when the backward slide prevention means is released from its operation, a lower portion of the tailgate is locked, and that when the backward slide prevention means operates, the lower portion of the tailgate is released from the locking.

The truck of the above construction operates as follows.

First, when a loading or unloading of vehicles is effected, the backward slide prevention means is released from its operation and in this state the dump frame is tilted up to a predetermined angle.

Then, the cargo container is slid backward. When the slide is finished, the tailgate is turned. At this time, in connection with the release of the backward slide prevention means, the tailgate locking means locks a lower portion of the tailgate. Therefore, the tailgate can be used as a footboard.

On the other hand, in the case of tipping the cargo container, the dump frame is tilted with the backward slide prevention means being in a locking condition. In this case, because the backward slide prevention means is in the locking state, the tailgate locking means is free from its operation. When the dump frame is tilted more than a predetermined angle, the tailgate is opened by the automatic opening and closing device, so that a load can be discharged.

As described above, the truck according to the present invention is so arranged that the backward slide prevention means is interlocked with the tailgate locking means so that the tailgate locking means is put into operation when the backward slide prevention means is released from its operation, and that the tailgate locking means stops locking when the back slide prevention means is brought into a locking state. Therefore, it is possible to use the tailgate as a footboard without dropping the same during loading or unloading of vehicles. It is also possible to fix the cargo container to the dump frame during dumping and securely discharge cargoes. Therefore, there is no possibility that the turnover of the truck should occur.

Also, in order to accomplish the seventh advantage, in a dump truck wherein front and rear bearers are fastened on a chassis, a bottom surface of a cargo container tiltably supported on a chassis is able to rest on the bearers, a tilting device is provided on an inner side of the chassis for tilting the cargo container, part of a drive device is provided on an outer side of the chassis, and part of piping for communicating the tilting device to the drive device is disposed in a clearance between the front and rear bearers, the dump truck is characterized in that a stopper member which is lower than the height of the bearers is provided on the bottom surface of the cargo container or on a top surface of the chassis so as to confront the top surface of the chassis or the bottom surface of the cargo container between the front and rear bearers so that the piping does not touch the bottom surface of the cargo container.

The dump truck of the above construction operates as follows.

By starting the driving device, the tilting device is operated. By the operation of the tilting device, the cargo container is tilted to effect an unloading operation. After completion of the operation, the cargo container is lowered to rest on the bearers.

In this case, even when the bearers are deformed, a certain clearance between the chassis and the cargo container is ensured due to the presence of the stopper member. In this way, the piping is prevented from being damaged.

As described above, according to the present invention, because the stopper member which is smaller in height than the bearers is disposed on the cargo container or on the chassis and caused to contact the chassis or the cargo container when the bearers are deformed, a clearance between the chassis and cargo container is secured even after deformation of the bearers occurs, and thereby damage to the piping can be prevented.

Furthermore, in order to accomplish the eighth advantage of the present invention, in a car carrier truck wherein a dump frame which is tiltably supported by a tilting device is provided on a chassis and a load-carrying platform which is caused to move in a longitudinal direction of the dump frame by a slide device is provided on the dump frame, the truck is characterized in that a moving pad slidable on the dump frame is fixed to a main girder of the load-carrying platform in a front position of the main girder where it is impossible for the load-carrying platform to be disengaged from the dump frame when the load-carrying platform is moved to a rearmost position; a plurality of fixed pads are aligned on a top surface of the dump frame at appropriate intervals; and a side surface of a rear one of the fixed pads which supports the load-carrying platform in a movement of the load-carrying platform to the rearmost position projects from the dump frame and contacts a side surface of the main girder so that the load-carrying platform is prevented from rolling by the moving pad and the rear fixed pad.

The car carrier truck with the above construction operates as follows.

The dump frame on the chassis is tilted by a predetermined angle, and in this state, the load-carrying platform is moved backward, and then vehicles are loaded on the tilted load-carrying platform by making them run. After vehicles are loaded on the load-carrying platform, the load-carrying platform is moved forward. After that, the dump frame is lowered so as to rest on the chassis. In this way, loading of vehicles is completed. The truck is then driven to a destination.

As described above, the present invention provides a car carrier truck wherein fixed pads are provided on the dump frame so that the main girders are moved slidingly on the fixed pads, and wherein a moving pad provided in a front portion of the main girder moves slidingly on the dump frame, and at the same time, the rear fixed pads are slidingly contacted with a side face of the main girder. By this arrangement, a smooth longitudinal movement of the load-carrying platform is obtained, and at the same time, the load-carrying platform is prevented from rolling. Accordingly, the loading and unloading operation of vehicles can be effected safely.

Moreover, in order to accomplish the ninth advantage, in a car carrier truck used also as a dump truck wherein a dump frame is mounted on a chassis and a load-carrying platform is provided on the dump frame, and wherein the load-carrying platform can tilt integrally with the dump frame and also can move longitudinally after tilting of the dump frame by a predetermined angle, the truck is characterized in that a locking device is provided between the dump frame and the load-carrying platform for locking the load-carrying platform onto the dump frame; a lock detection means is provided in the vicinity of the locking device for detecting a locking state; and a controlling device is provided for insuring that a full-tilt operation becomes effective only when the locking state is detected by the lock detection means.

The truck with the above construction operates as follows.

In the case that the truck is used as a dump truck, the locking device is operated and the load-carrying platform is fully tilted integrally with the dump frame.

It is to be noted here that when a fully tilting operation of the dump frame is tried while the locking device is not operated, the operation does not become effective because of the operation of the control device. Thereby, a danger that the load-carrying platform might fall off can be avoided.

In the case that the truck is used as a car carrier truck, the load-carrying platform is tilted by a predetermined angle with the lock device out of operation, and then moved back and forth to load or unload vehicles.

As described above, the truck according to the present invention has a locking device for combining the load-carrying platform and the dump frame integrally and a lock detection means for detecting a locking state of the locking device so that the full-tilting operation of the load-carrying platform becomes effective only when the locking state of the locking device is detected by the lock detection means. Therefore, when the truck is used as a dump truck, it is possible to securely avoid the danger that the load-carrying platform might fall off and thereby to ensure a safety of the operation.

In order to accomplish the tenth advantage, in a car carrier truck wherein a dump frame is mounted on a chassis and a load-carrying platform is provided on the dump frame, the load-carrying platform being able to be moved longitudinally after tilting of the dump frame by a predetermined angle, the car carrier truck according to the present invention is characterized in that an upper limit detection means and a lower limit detection means are provided on the chassis or on the dump frame for detecting an upper limit angle and a lower limit angle of the dump frame; and a controlling device is provided for restricting a tilting of the dump frame above the upper limit angle and a longitudinal movement of the load-carrying platform with the dump frame being at a tilt angle below the lower limit angle, based on what is detected by the upper and lower limit detection means.

The car carrier truck with the above construction operates as follows.

After the load-carrying platform is tilted up to a predetermined angle by the tilting device, the load-carrying platform is moved backward along the dump frame up to the most backward position. Loading or unloading of vehicles is conducted in this state. After completion of the loading or unloading operation, the load-carrying platform is moved to the most forward position and then lowered to the original position.

In this case, when the load-carrying platform is tilted at less than the predetermined lower limit angle, the backward and forward movements of the load-carrying platform are restricted. In addition, when the upper limit angle is reached, the load-carrying platform is made to stop tilting.

As described above, the truck according to the present invention has the lower and upper limit detection means for detecting respectively the lower and upper limit angles for the tilt of the dump frame so that the longitudinal movements of the load-carrying platform are restricted while the tilt angle of the dump frame is below the lower limit and that when the upper limit angle is reached, the tilting of the dump frame is stopped. Therefore, an operation for moving the load-carrying plat form longitudinally can be effected securely within a predetermined range of the tilt angle of the dump frame. Thus, fenders or other things can be prevented from being damaged and also vehicles can be prevented from dropping slidingly by their own weights.

Furthermore, in order to accomplish the eleventh advantage, in a car carrier truck used also as a dump truck wherein a dump frame is provided on a chassis, the dump frame being able to be tilted by a tilting device, and wherein a load-carrying platform is provided on the dump frame, the load-carrying platform being able to be moved longitudinally by a slide device, the truck is characterized in that a dump operation switch device constituted from a tilt switch for actuating the tilting device is provided inside of a cab; a slide operation switch device constituted from a tilt switch for actuating the tilting device and a slide switch for actuating the slide device is provided outside of the cab; and a select switch capable of selecting only one of the dump operation switch device and the slide operation switch device.

The truck with the above construction operates as follows.

When the truck is used as a dump truck, the select switch is changed over to a dump-operation side, and the dumping operation is carried out by operating the dump operation switch device in the cab.

When the truck is used as a car carrier truck, the select switch is changed over to a slide-operation side, and the vehicle loading or unloading operation is carried out by operating the slide operation switch device outside the cab.

As described above, the truck according to the present invention has the dump operation switch device inside of its cab and the slide operation switch device outside of the cab. The truck also has the select switch capable of selecting only one of the switch devices. Therefore, on one hand, during a dumping operation an operator can operate the truck inside of the cab like a usual dump truck, and on the other hand, during the loading and unloading operations of vehicles the operator can operate the truck outside of the cab to move the load-carrying platform forward or backward, confirming safety around the truck. Like this, work positions can be taken in accordance with respective operation modes. Moreover, because the select switch allows use of only one of the switch devices, even when the other of the switch devices is operated by mistake during the operation of the one switch device, it does not become operative. Thus safety is secured during operation.

### THE BRIEF DESCRIPTION OF THE DRAWINGS

Fig. 1 is a sectional view of an embodiment according to the present invention;
Fig. 2 is an illustration explaining how a lower sliding pad is installed in the above embodiment;
Fig. 3 is an explanatory schematic illustration of the car carrier truck of the above embodiment in a state in which a cargo container is being moved slidingly on a dump frame;
Fig. 4 is a rear elevation of a further advantageous truck;
Fig. 5 is a side elevation of the truck shown in Fig. 4;
Fig. 6 is a side elevation of the truck shown in Fig. 4 in a state in which a load-carrying platform is tilted and placed on the ground;
Fig. 7 is a side view of the truck shown in Fig. 4 in a state in which the load-carrying platform is tilted without being placed on the ground;
Fig. 8 is a perspective view of an essential portion of the truck shown in Fig. 4;
Fig. 9 is a general view of a further advantageous car carrier truck;
Fig. 10 is an illustration showing a vehicle unloading operation by the truck shown in Fig. 9;
Fig. 11 is an illustration of the truck shown in Fig. 9 in operation when the cargo container is tilted at a maximum angle;
Fig. 12 is an enlarged view of a portion including a support leg device of the truck shown in Fig. 9;
Fig. 13 is a sectional view taken along the line A-A in Fig. 12;
Fig. 14 is a general view of a car carrier truck used also as a further advantageous dump truck;
Fig. 15 is an illustration of the truck of Fig. 14 in operation when the dump frame is fully tilted;
Fig. 16 is an illustration of the truck in operation when loading or unloading of vehicles is carried out;
Fig. 17 is an enlarged view of a portion including a support leg of the truck shown in Fig. 14;
Fig. 18 is a view taken in the direction of the arrows along the line A-A in Fig. 17;
Fig. 19 is an enlarged view, similar to Fig.17, in the full tilting operation;
Fig. 20 is a general view of a car carrier truck used also as a further advantageous dump truck;
Figs. 21 and 22 are views showing operational states of the truck of Fig.20;
Fig. 23 is a fragmentary enlarged view showing a backward slide prevention means, a tailgate locking means and a control means of the truck shown in Fig. 14;
Fig. 24 is a sectional view taken along the line A-A in Fig. 23;
Fig. 25 is a sectional view taken along the line B-B in Fig. 23;
Fig. 26 is a sectional view taken along the line C-C in Fig. 23;
Fig. 27 is a sectional view taken along the line D-D in Fig. 23;
Fig. 28 is an enlarged top view of the operation means;
Fig. 29 is an enlarged front view of the operation means;
Fig. 30 is a sectional view taken along the line E-E in Fig. 29;
Figs. 31(a), 31(b), and 31(c) are respectively operational views of the operation means, the tailgate locking means and the backward slide prevention means;
Fig. 32 is a general view of a car carrier truck used also as a further advantageous dump truck;
Fig. 33 is a general view of the truck of Fig. 32 in a fully tilted state;
Fig. 34 is a general view of the truck during the sliding operation of the cargo container;
Fig. 35 is a top view of a chassis of the truck of Fig. 32;
Fig. 36 is a sectional view taken along the line A-A in Fig. 35;
Fig. 37 is a general view of a further advantageous car carrier truck;
Fig. 38 is an illustration showing an operational state of the truck shown in Fig. 37;
Fig. 39 is a side view of a dump frame of the car carrier truck of Fig. 37;
Fig. 40 is a top view of the dump frame of Fig. 39;
Fig. 41 is a sectional view taken along the line A-A in Fig. 40;
Fig. 42 is a sectional view taken along the line B-B in Fig. 40;
Fig. 43 is a general view of a car carrier truck used also as a further advantageous dump truck;
Figs. 44 and 45 are views showing operational states of the truck of Fig. 43;
Fig. 46 is a fragmentary enlarged view showing a lock detection means, an upper limit detection means, a lower limit detection means, etc.;
Fig. 47 is a sectional view taken along the line A-A in Fig. 46;
Fig. 48 is an oil circuit diagram according to the eighth embodiment;
Fig. 49 is an electric circuit diagram according to the eighth embodiment;
Figs. 50 and 51 are views of a common car carrier truck; and
Fig. 52 is a sectional view of a prior art.

### BEST EMBODIMENTS OF THE INVENTION

Hereinbelow, the present invention will be described in detail with respect to the embodiments illustrated in the accompanying drawings.

### Embodiment of the present invention

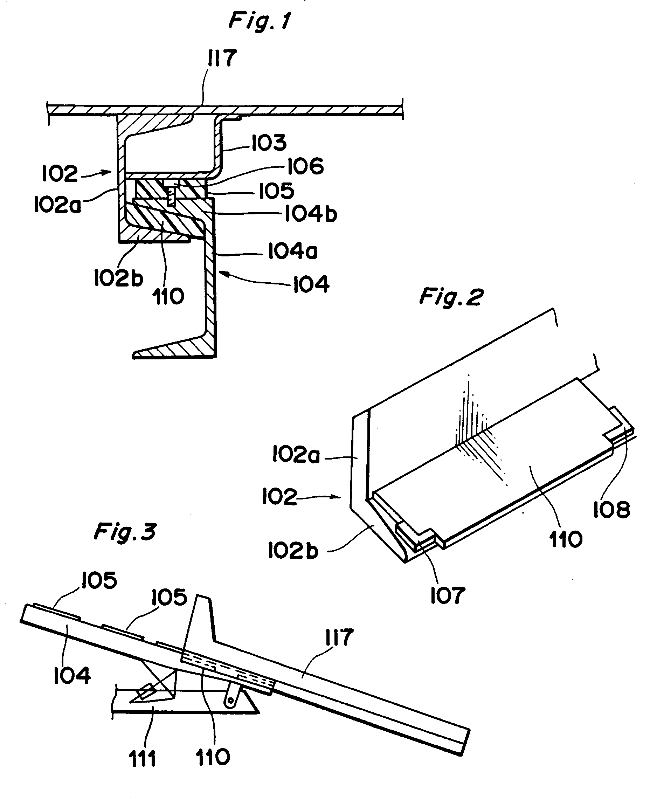

Fig. 1 shows a sliding pad installation structure according to a first embodiment according to the present invention, and this sliding pad installation structure is applicable to a common car carrier truck as shown in Figs. 50 and 51.

In Fig.1, a reference numeral 102 indicates a main girder having a U-shaped section extending in the longitudinal direction at the bottom of a cargo container 117, a numeral 103 indicates a subsidiary girder installed on an inner side of a vertical portion 102a of the main girder 102, a numeral 104 indicates a dump frame which has a U-shaped section and whose upper horizontal portion 104b is inserted between a lower horizontal portion 102b of the main girder 102 and the subsidiary girder 103.

An upper sliding pad 105 of a resin such as nylon is fixed on an upper surface of the upper horizontal portion 104b of the dump frame 104 with bolts 106. The upper sliding pad 105 supports the subsidiary girder 103 in such a manner that the subsidiary girder can move slidingly.

On an upper surface of the lower horizontal portion 102b of the main girder 102 are fixed stoppers 107 and 108, as shown in Fig. 2. A lower sliding pad 110 made of a resin such as nylon is fitted among the stoppers 107 and 108 and the vertical portion 102a of the main girder 102. The lower sliding pad 110 is prevented from moving in its longitudinal direction by the stoppers 107 and 108, and in a horizontal direction perpendicular to the longitudinal direction by the stoppers 107 and 108 and the vertical portion 102a of the main girder 102.

The lower sliding pad 110 is also in contact with a vertical portion 104a of the dump frame 104 so as to prevent the cargo container 117 from moving in a horizontal direction perpendicular to the longitudinal direction relative to the dump frame 104. Furthermore,the lower sliding pad 110 is of a planar form with the upper and lower surfaces thereof being in contact with respectively a lower surface of the upper horizontal portion 104b of the dump frame 104 and an upper surface of the lower horizontal portion 102b of the main girder 102, and thereby restricts a vertical movement of the cargo container 117. In order that the flat planar lower sliding pad can be used, a shape steel beam common to the main girder 102 and the dump frame 104 is used.

A plurality of upper sliding pads 105 and a plurality of lower sliding pads 110 are mounted at appropriate intervals in the longitudinal direction, as shown in Fig. 3. The cargo, container 117 moves slidingly on the upper sliding pad 105 fastened onto the dump frame 104. Vertical and lateral movements of the cargo container 117 is restricted by the lower sliding pad 110 between the dump frame 104 and the main girder 102, so that the cargo container 117 can be smoothly slid, in a tilted condition, on the dump frame 104 in the longitudinal direction relative to the chassis 111.

In this case, the lower sliding pad 110 is in contact with the dump frame 104 and is subjected to a force in the longitudinal direction by the dump frame 104. However, the stoppers 107 and 108 prevents the lower sliding pad 110 from being disengaged. Besides, the stoppers 107 and 108 functions so as to prevent the lower sliding pad 110 from moving in a horizontal direction perpendicular to the longitudinal direction. But, because the lower sliding pad 110 is in contact with the vertical portion 102a of the main girder 102 and the vertical portion 104a of the dump frame 104, as shown in Fig. 1, the lower sliding pad 110 would not get out of place in the horizontal direction even if the stoppers did not have engagement portions for stopping the movement in this horizontal direction.

As described above, because the lower sliding pad 110 is not fastened with bolts unlike prior art examples but fitted between stoppers 107 and 108 fastened on the lower horizontal portion 102b of the main girder 102, the installation and replacement of the lower sliding pad become easy.

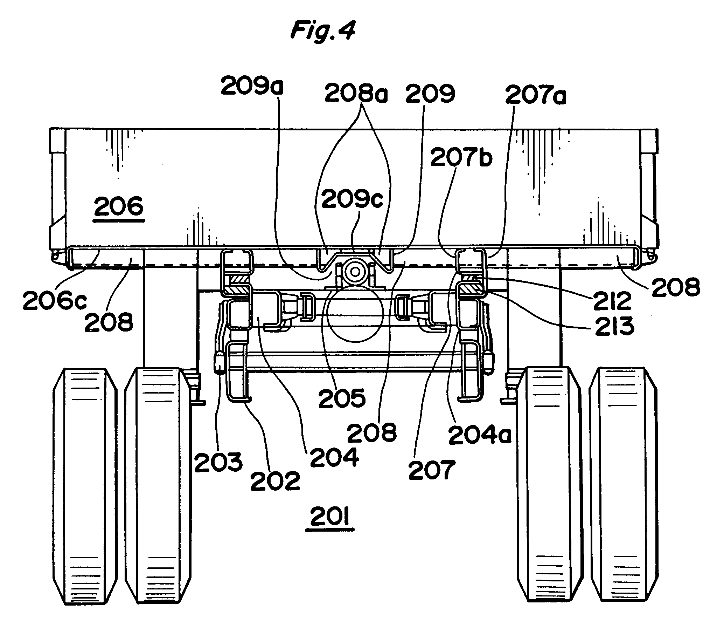

Figs. 4 to 8 show a further advantageous truck.

As shown in Fig. 4, the car carrier truck 201 is essentially constituted from a chassis frame 202, a sub-frame, namely, a dump frame 204 supported on a pivotal shaft 203 tiltably relative to the chassis frame 202, a load-carrying platform 206 supported on the dump frame 204 so that the platform can be longitudinally moved slidingly by a cylinder device 205, a pair of right and left main girders 207 extending on the load-carrying platform 206 in the longitudinal direction thereof, a plurality of traverse girders 208 intersecting each main girder 207 at right angles and connected thereto in a lateral direction, and a subsidiary girder 209 connecting center-side end portions 208a of the traverse girders 208 located between the main girders 207.

The subsidiary girder 209 is provided with an upward recess 209a at a central lower portion thereof. A cylinder device 205 is disposed in the recess 209a.

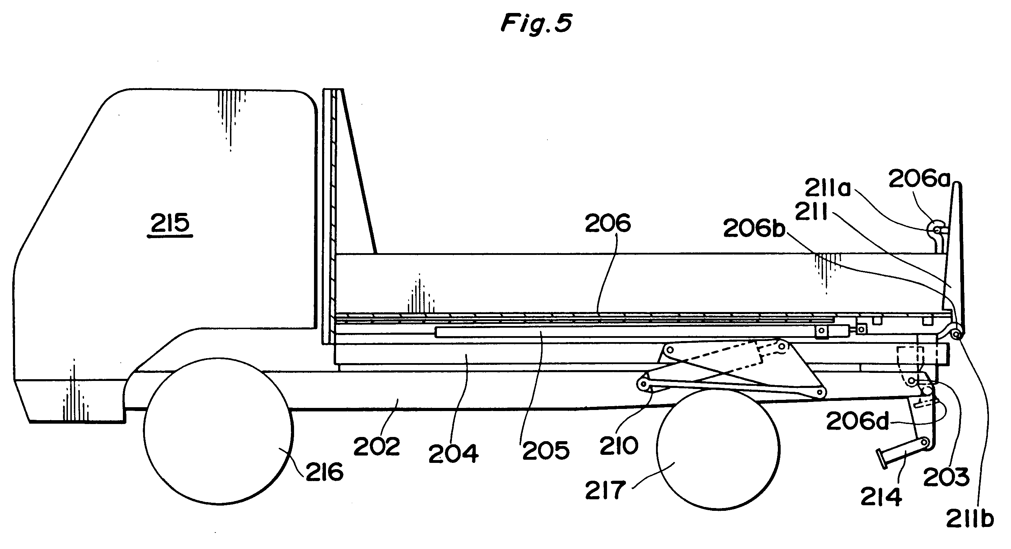

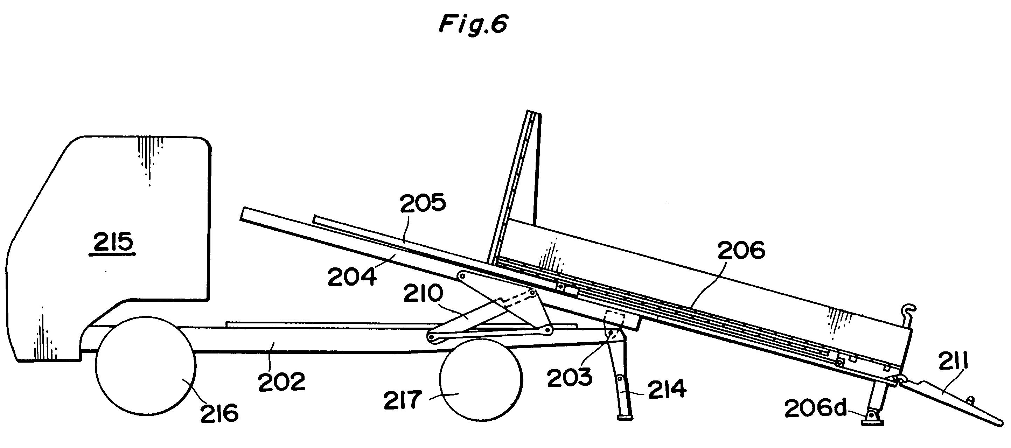

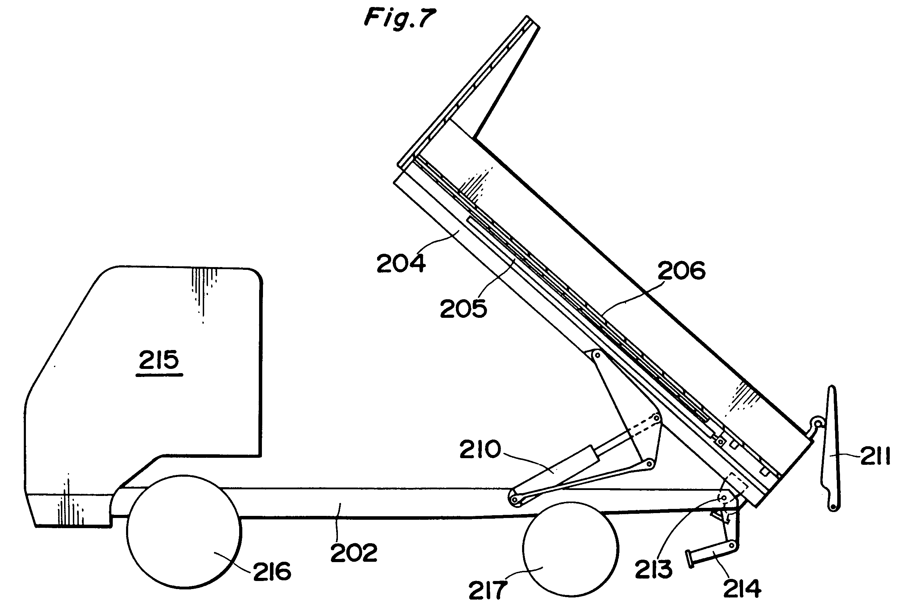

Referring to Fig. 5, a reference numeral 210 designates a cylinder device used for a tilting operation. The cylinder device 210 is interposed as part of tilting means between the chassis frame 202 and the dump frame 204. The dump frame 204 is tilted through the extension of the tilt cylinder device 210, as shown in Figs. 6 and 7. The load-carrying platform 206 is formed as a cargo container, at a rear end portion of which is provided a tailgate 211. The tailgate 211 is provided with upper hinge pins 211a and lower hinge pins 211b, as shown in Fig. 5. The hinge pins 211a can be detachably engaged with hooks 206a fitted to the load-carrying platform 206. Similarly, lower hinge pins 211b can be also detachably engaged with hooks 206b fitted to the load-carrying platform 206.

In the case that the dump frame 204 is tilted, if only the hooks 206b are disengaged, the tailgate 211 becomes rotatable around the upper hinge pins 211a. Accordingly, by tilting the load-carrying platform 206 backward, cargoes such as soil, sand, for example, can be made to fall slidingly (see Fig. 7).

On the other hand, when only the hooks 206a are disconnected, the tailgate 211 becomes rotatable around the lower hinges 211b. Thus, the tailgate 211 makes a footboard connecting the rear end of the load-carrying platform 206 and the ground when the load-carrying platform 206 is slid backward and tilted (see Fig. 6). Therefore, vehicles such as construction vehicles can ascend the footboard, as described above. At this time, the support legs 206b in the rear of the load-carrying platform 206 are brought into a grounded state.

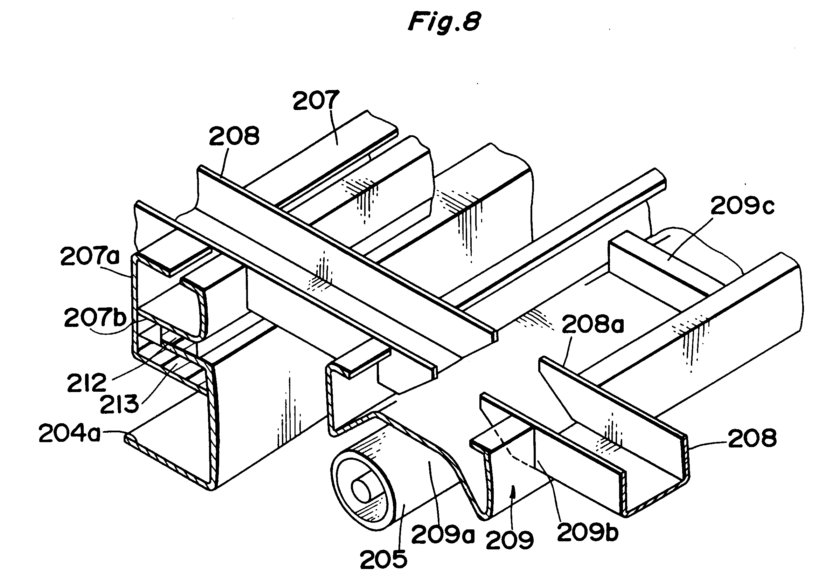

The main girder 207 is, as shown in Figs. 4 and 8, constituted from large and small channel members 207a and 207b in combination. The gutter-shaped traverse girders 208 across the main girder 207 are disposed in notches formed in the main girder and integrally welded to the main girder. The recess 209a of the subsidiary girder 209 recedes, as shown in Figs. 4 and 8, in a plateau shape. The subsidiary girder 209 is also provided with notches 209b so that the the traverse girders 208 on both sides enter in the notches 209b. The center-side end portions 208a of the traverse girders 208 are fitted in the notches 209b and integrated with the subsidiary girder by welding.

There is some gap between an upper surface of the central portion of the subsidiary girder 209 and a back surface of the load-carrying platform 206, and the subsidiary girder 209 is reinforced in the gap by a reinforcing member 209c. This reinforcing member 209c is not always necessary, and the gap can be also eliminated by deepening the recess 209a. The recess 209a may be in a shape other than a plateau.

On the dump frame 204 as well, there are provided a pair of right and left main girders 204a extending in a longitudinal direction of the dump frame and corresponding to the main girders 207 of the load-carrying platform 206. The main girder 204a is formed of a channel member. A sliding pad 212 made of hard cloth or synthetic resin is disposed between an upper portion of the channel member 204a and the channel member 207b of the main girder 207. This sliding pad 212 is fixedly attached to the main girder 204a. A vertical dimension between the main girder 204a and the channel member 207b, namely, a vertical position of the load-carrying platform 206 relative to the dump frame 204 is regulated by the sliding pad 212.

Furthermore, another sliding pad 213 of a similar material is disposed between the upper portion of the main girder 204a and the channel member 207a of the main girder 207 and fastened on the channel member 207a. The sliding pad 213 is for regulating a lateral position of the dump frame 204 relative to the load-carrying platform 206 so that a center line of the dump frame 204 agrees with that of the load-carrying platform 206. In this manner, the load-carrying platform 206 is supported so as to be slidable in the longitudinal direction relative to the dump frame 204.

A numeral 214 designates an outrigger provided on the chassis frame 202. The outrigger 214 can be bent forward as shown in Fig. 5 or stood upright on the ground. Particularly as shown in Fig. 6, when vehicles such as construction vehicles are loaded, the load-carrying platform 206 is moved backward and placed on the ground at its rear end. In this manner, the truck provides against the contact of the rear end of chassis frame 202 with the ground. Here, a reference numeral 215 designates a cab, a numeral 216 designates a front wheel, and a numeral 217 designates a rear wheel.

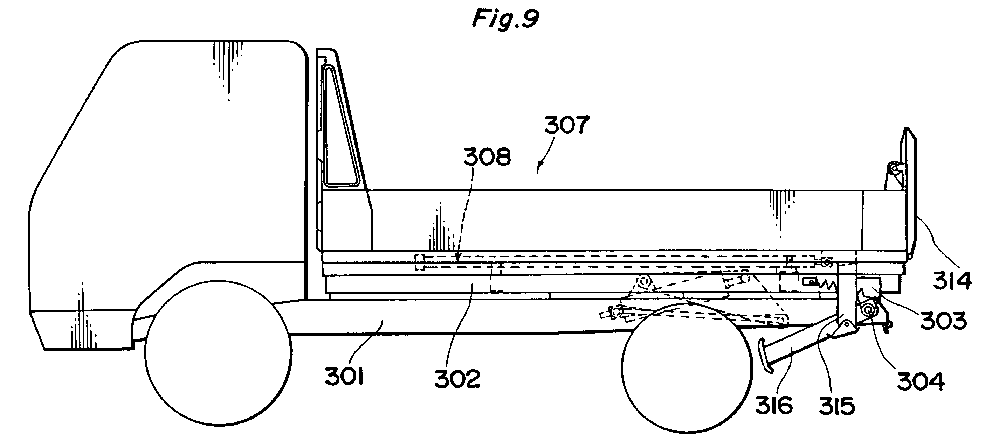

Figs.9 to 13 show a further advantageous car carrier truck.

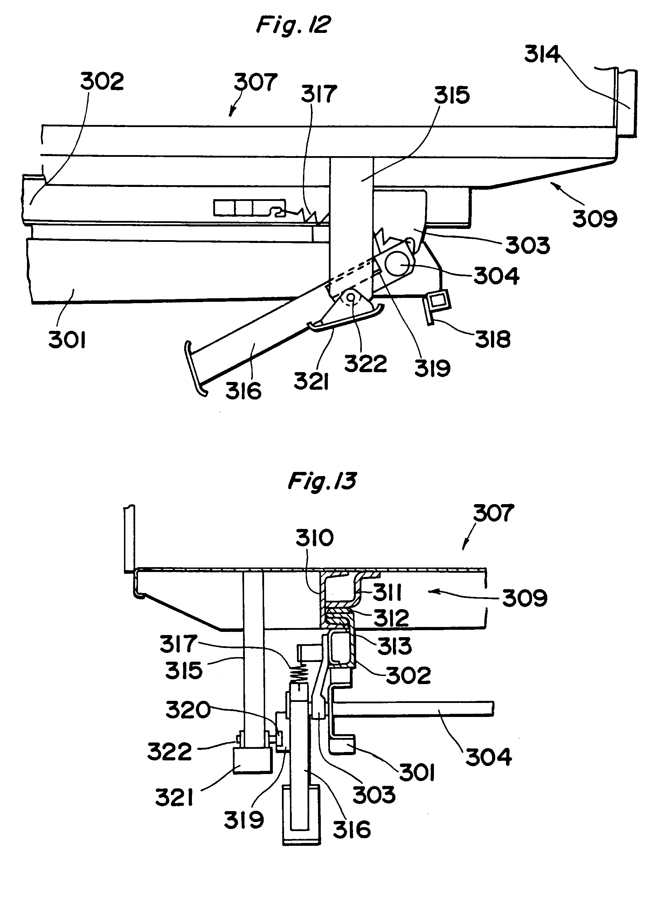

Referring to Fig. 9, a reference numeral 301 designates a chassis, on which a dump frame 302 is provided. Hinge brackets 303 are provided at a rear end of the dump frame 302 perpendicularly to the dump frame. By pivotably supporting the hinge brackets 303 on the chassis 301 through a hinge shaft 304 as shown in Fig. 12, the dump frame 302 is tilted.

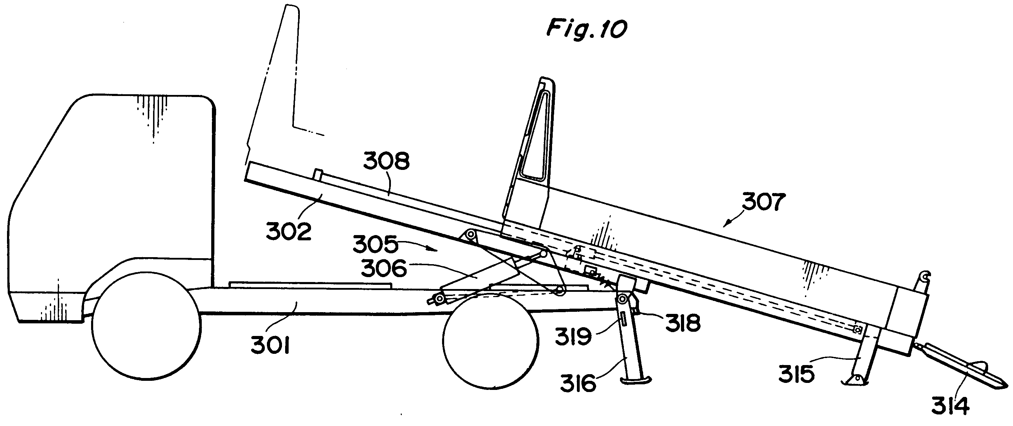

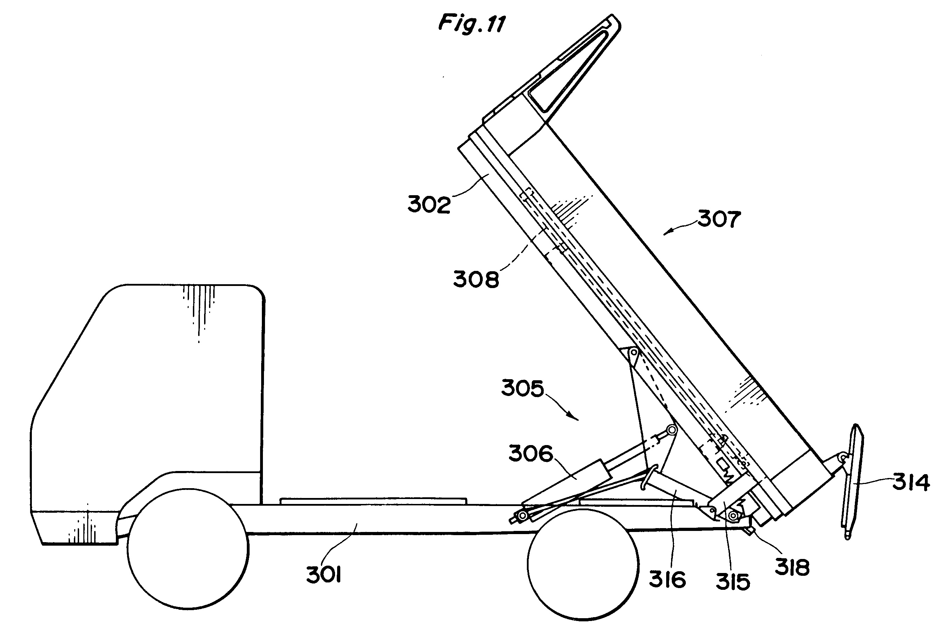

Furthermore, as shown in Figs. 10 and 11, there is provided a lifting device 305 between the chassis 301 and the dump frame 302. The dump frame 302 is tilted by extending a tilt cylinder 306 which is part of the lifting device 305.

A cargo container 307 for carrying vehicles is mounted on the dump frame 302. A slide cylinder 308 is disposed between the dump frame 302 and the cargo container 307, extending in the longitudinal direction. The cargo container 307 is adapted to move slidingly backward when the slide cylinder 308 extends.

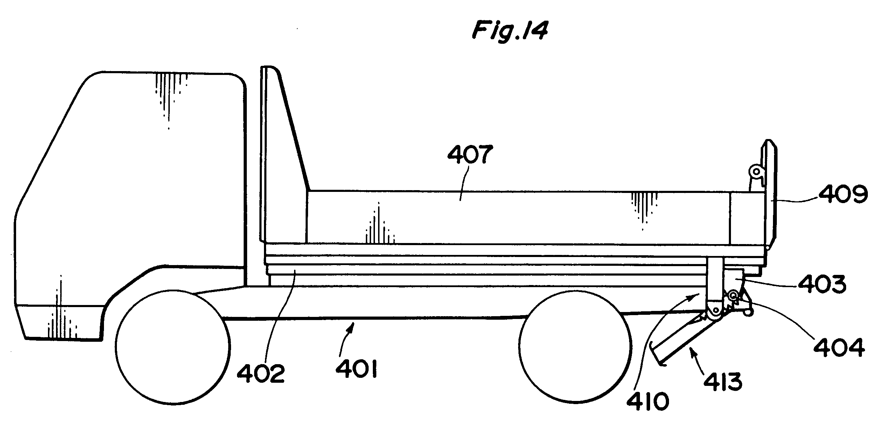

In order to prevent the cargo container 307 from being disengaged from the dump frame 302 at that time, as shown in Fig. 13 wherein a cross section of a main girder 309 provided on the back of the cargo container 307 is shown, the main girder 309 is constituted from a main frame 310 of U-shaped section and a subsidiary frame 311 provided inside of the main frame 310. An upper portion of the dump frame 302 is inserted between the subsidiary frame 311 and a lower portion of the main frame 310. Upper and lower support members 312 and 313 are provided on and under the upper portion of the dump frame 302, respectively. The subsidiary frame 311 is slidably supported by the upper support member 312, and the lower portion of the main frame 310 is in contact with the lower support member 313. In this way, the cargo container 307 is prevented from springing up.

The cargo container 307 is provided with a tailgate 314, and by locking the tailgate at upper and lower portions thereof, the rear of the cargo container 307 is closed.

When either of the upper and lower lockings is released, the tailgate 314 can be rotated to be opened, as shown in Figs. 10 and 11. Particularly when the upper locking is released, the tailgate 314 serves as a footboard, as shown in Fig. 10.

Furthermore, there are provided cargo container support legs 315 at the rear and lower portion of the cargo container 307 perpendicularly to the cargo container. When the cargo container 307 is slid backward, the support legs 315 contact the ground so as to support the cargo container 307, as shown in Figs. 10 and 11.

A reference numeral 316 indicates a chassis support leg provided in the rear portion of the chassis 301. The support legs 316 are pivotably attached to a hinge shaft 304 so as to be swung along the longitudinal direction.

As shown in Figs. 12 and 13, there is provided a spring 317 as a resilient member between the upper portion of the support leg 316 and the dump frame 302. The support leg is at all times urged in a protruding direction of the leg by the spring 317, and brought into contact with a stopper member 318 on the chassis 301 at a predetermined protrusion position and held there.

Reference numeral 319 designates a guide piece which is projectingly mounted on an outer-side surface of the chassis support leg 316. The guide pieces 319 are formed planar.

In Fig. 13, a reference numeral 320 designates a roller as a control member which is mounted on the inner side of a shaft 322 pivoting a pedestal of the cargo container support leg 315. When the cargo container 307 is slidingly moved forward, the roller 320 comes into contact with the guide piece 319 and turns the guide piece 319 and the chassis support leg 316 forward so as to retract the same.

In this truck, the guide piece is mounted on the chassis support leg 316 and the roller on the cargo container support leg 315. However, similar function and advantages are obtained if the guide piece is mounted on the cargo container support leg and the roller on the chassis support leg.

In addition, the spring can offer similar function and advantage even when provided between the chassis and and the chassis support leg.

The following describes how the car carrier truck with the above construction operates. When the truck is changed from a running state (see Fig. 9) to a vehicle loading or unloading state (see Fig. 10), the tilt cylinder 306 is extended so as to tilt the dump frame 302 at a predetermined angle. At this time, the chassis support legs 316 are supported by the cargo container support legs 315 and held in a retracted state.

After the dump frame 302 is tilted, the slide cylinder 308 is extended so as to slide the cargo container 307 till the cargo container support legs 315 are grounded. In this case, at an initial stage of the sliding movement, since the cargo container support legs 315 also move backward, the rollers 320 become separated from the respective guide pieces 319. Then, the chassis support legs 316 are urged by the springs 317 and turn backward until they contact the stopper member 318, so that the chassis support legs are brought into a protruding state.

After the cargo container support legs 315 are grounded, the upper locking of the tailgate 314 is released so that the tailgate is turned to be used as a footboard.

After the above state (Fig. 10) is reached, the loading and/or unloading of vehicles is carried out. In this case, because the cargo container 307 and chassis 301 are supported by the respective support legs 315 and 316, it is possible to carry out the loading and unloading operation of vehicles in a stable condition.

After completion of the loading or unloading operation of vehicles, the tailgate 314 is closed, the cargo container 307 is slid forward by contracting the slide cylinder 308, the dump frame 302 is lowered, and the cargo container 307 is retracted. In this case, because the rollers 320 come into contact with the guide pieces 319 in a final stage of the sliding movement, the protruding chassis support legs 316 are turned forward against the spring force, and retracted.

On the other hand, in the case that the truck is used for transportation of soil, sand or the like, the transport operation is made with the cargo container 307 being retracted as shown in Fig. 9. The tilt cylinder 306 is extended at maximum at a dump site, so that the dump frame 302 and the cargo container 307 are tilted at a maximum angle, as shown in Fig. 11. At the same time, the lower locking of the tailgate 314 is released, and thus, soil, sand or the like in the cargo container 307 can be discharged. In this case, the chassis support legs 316 are maintained retracted by the cargo container support legs 315.

Figs.14 to 19 show a further advantageous car carrier truck used also as a dump truck.

In the general view shown in Fig. 14, a reference numeral 401 indicates a chassis, and there is provided a dump frame 402 on the chassis 401.

There is vertically provided a bracket 403 at a rear end of the dump frame 402. The bracket 403 is pivotably supported on the chassis 401 by a hinge shaft 404, whereby the dump frame 402 is adapted to tilt.

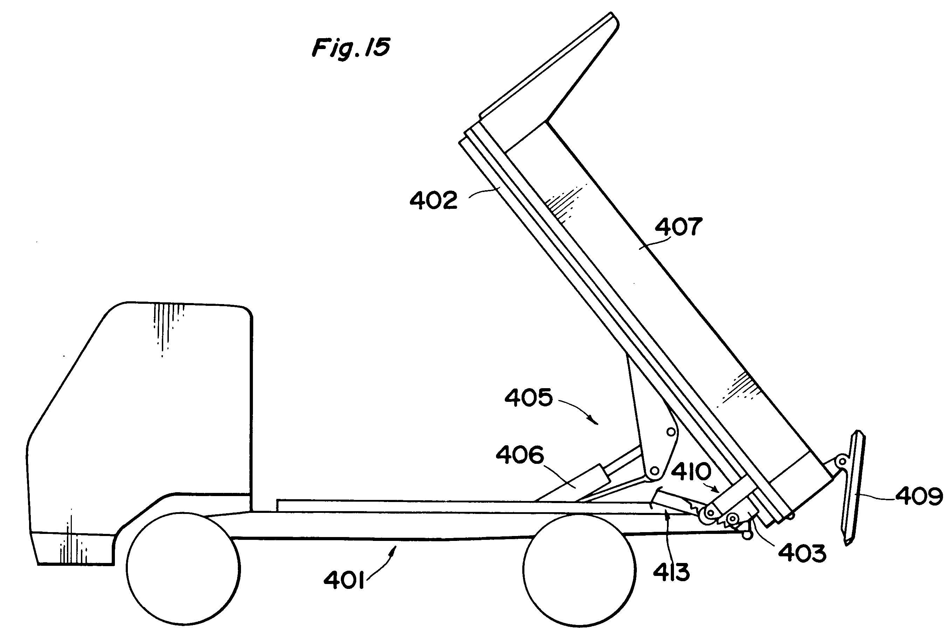

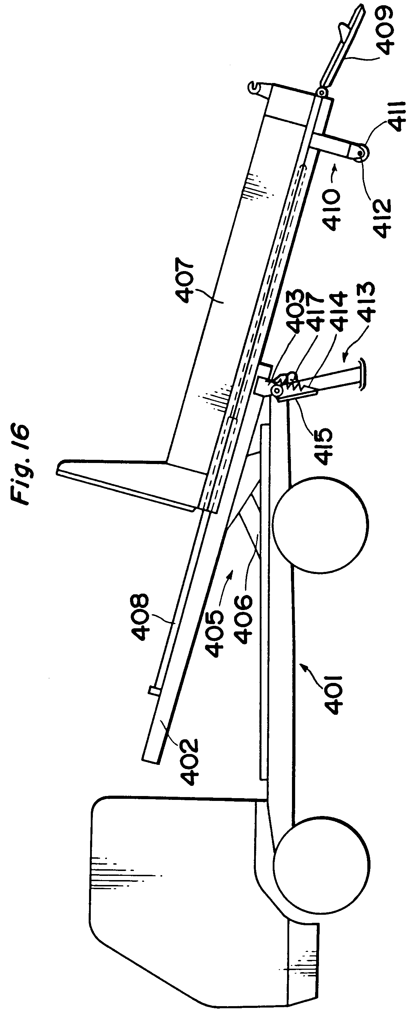

Furthermore, there is provided a tilting device 405 between the chassis 401 and the dump frame 402, as shown in Figs. 15 and 16. By expanding a tilt cylinder 406 which is part of the tilting device 405, the dump frame 402 is tilted to its full-tilt position (about 50 to 60°).

A load-carrying platform 407 is mounted on the dump frame 402, and as shown in Fig. 16, a slide cylinder 408 is disposed, extending in a longitudinal direction, between the dump frame 402 and the load-carrying platform 407. The load-carrying platform is moved backward by expanding the cylinder 408.

The load-carrying platform 407 is provided with a tailgate 409, which has its upper and lower portions locked to close the rear of the load-carrying platform 407. When either of the upper and lower lockings is released, the tailgate 409 can be turned and opened. Particularly when the upper locking is released, the tailgate 409 serves as a footboard as shown in Fig. 16.

A reference numeral 410 is a load-carrying platform support leg 410 vertically provided at a rear lower portion of the load-carrying platform 407. The load-carrying platform support legs 410 have respective rollers 411 pivotably supported by shafts 412 at their lower ends, as shown in Figs. 16, 17, 18 and 19. The load-carrying platform support legs are adapted to support the load-carrying platform 407 when the rollers 411 are grounded. Moreover, the load-carrying platform support legs 410 are arranged to be located ahead of the hinge shaft 404 when load-carrying platform is at its most forward position (see Fig.14).

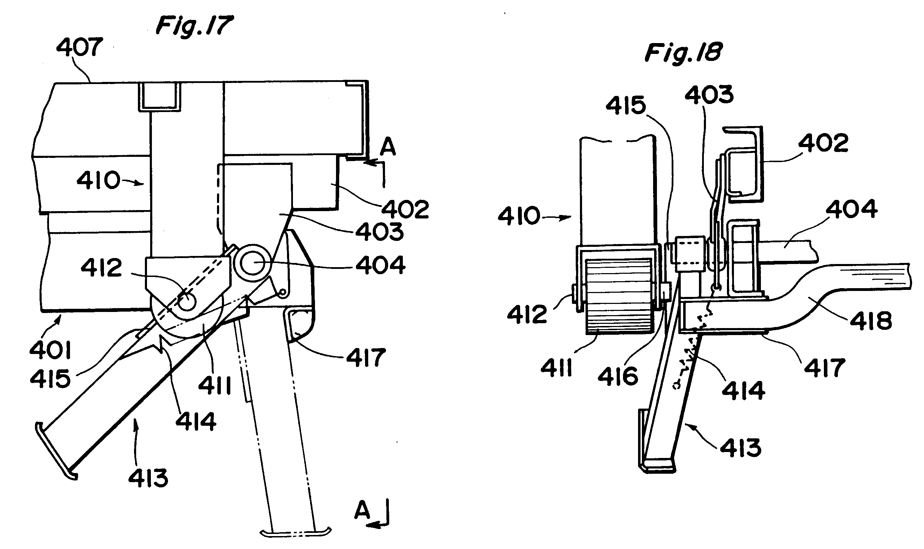

A reference numeral 413 indicates a chassis support leg 413 pivoted on the hinge shaft 404. The support legs 413 are arranged to be rotated between their protruding position (indicated by a two-dot chain line in Fig. 17)) and retracted position (indicated by a solid line in Fig.17). The truck is adapted to support the chassis 401 when the support legs are at the protruding position, and run when the support legs are at the retracted position.

Furthermore, there is provided a spring 414 between the chassis support leg 413 and the hinge bracket 403. The spring 414 urges at all times the chassis support leg 413 in the protruding position.

A reference numeral 415 indicates a planar guide piece 415 provided on the chassis support leg 413. An engagement member 416 (Fig. 18) projecting from the shaft 412 of the load-carrying platform support leg 410 is engaged with the guide piece 415 when the load-carrying platform 407 moves forward, whereby the chassis support leg 413 is rotated from the protruding position to the retracted position against the spring 414.

A reference numeral 417 designates a stopper member 417 for supporting the chassis support leg 413 at the protruding position. The stopper member 417 is fixed to the rear of the chassis 401 and also reinforced by a reinforcing shaft 418.

It is to be noted here that although the spring is fastened to the hinge bracket in the present embodiment, the same function and effect are obtained if the spring is fastened to the dump frame.

This truck has a construction as aforementioned. The following describes the operation of the truck.

First, in the case of loading and/or unloading of vehicles, the tilt cylinder 408 is extended from the state shown in Fig. 14 and the load-carrying platform 406 is tilted up to a predetermined angle (about 15°).

Thereafter, the slide cylinder 408 is extended so that the load-carrying platform 407 is moved backward. Then, as shown in Fig. 16, the load-carrying platform support legs 410 are grounded and the tailgate 409 is opened. The loading or unloading of vehicles is then carried out. Thereafter, the chassis support legs 413, which are at first located in the retracted position indicated by a solid line in Fig.17, are turned to the protruding position indicated in a two-dot chain line because of a disengagement from the engagement member 416 and by a force of the spring 414 and then support the chassis 401.

After completion of the loading or unloading of vehicles, the tailgate 409 is closed, and the slide cylinder 408 is contracted so that the load-carrying platform 407 is moved forward. Thereafter, the dump frame 402 is lowered by contracting the tilt cylinder 406.

In this case, since the engagement member 416 gets ahead of the hinge shaft 404, the engagement member 416 engages with the guide piece 415 and turns the chassis support leg 413 from its protruding position to its retracted position against the force of the spring 414.

When the truck is used as a dump truck, the load-carrying platform 407 is kept being fastened to the dump frame 402 by the slide cylinder 408, and the tilt cylinder 406 is extended from the state shown in Fig. 14, so that the dump frame 402 is fully tipped to discharge cargoes such as soil and sand.

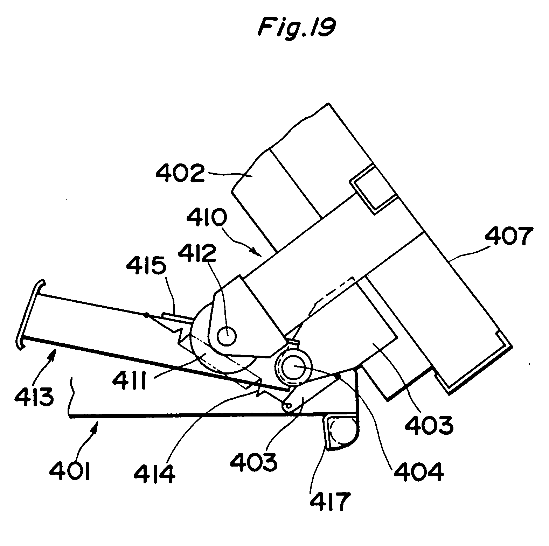

In this case, the chassis support legs 413 are turned further from the retracted position by the turn of the load-carrying platform support legs 410 as shown in Fig. 19. However, because the hinge brackets 403 are also turned together in the same direction, the springs are hardly expanded and therefore do not fail.

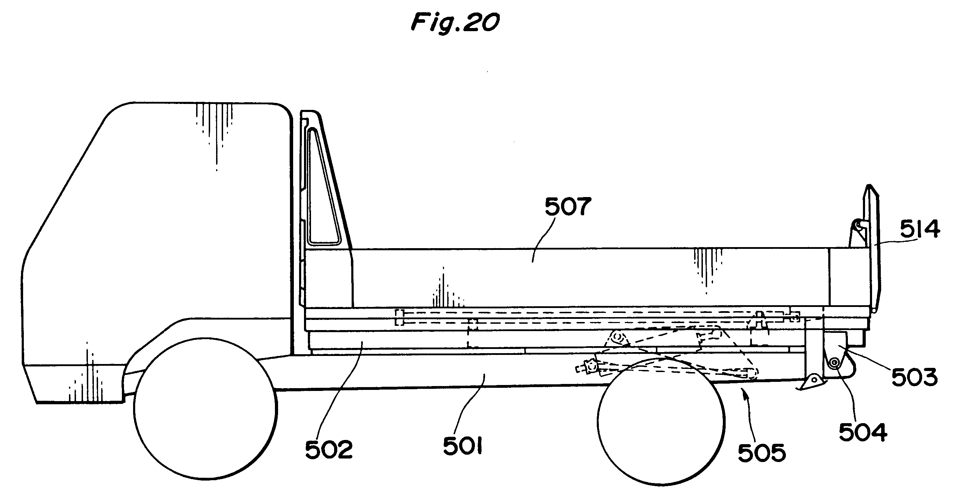

Figs. 20 to 31 show a further advantageous truck, wherein a reference numeral 501 indicates a chassis and a dump frame 502 is mounted on the chassis 501.

The dump frame 502 is provided at its rear end with hinge brackets 503 perpendicularly to the dump frame. The hinge brackets 503 are supported on the chassis 501 by hinge shafts 504 on which the hinge brackets pivot, whereby the dump frame 502 is made to tilt.

A lifting device 505 is disposed between the chassis 501 and the dump frame 502. The dump frame 502 is made to tilt by extension of a tilt cylinder 506 which is part of the lifting device 505.

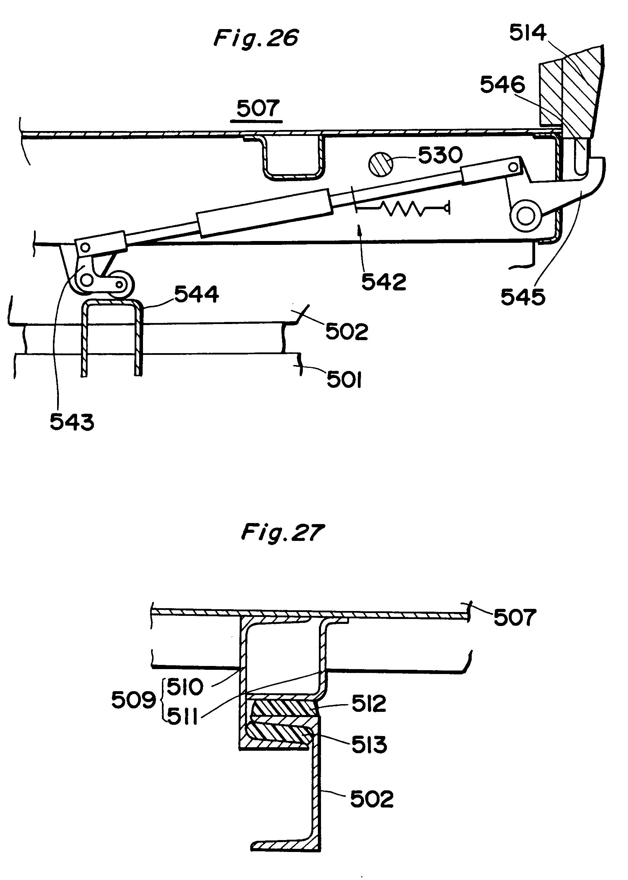

A cargo container 507 for carrying vehicles is mounted on the dump frame 502, and a slide cylinder 508 is disposed between the dump frame 502 and the cargo container 507, extending in a longitudinal direction as shown in Fig. 27. The cargo container 507 is designed to move slidingly backward by extending the slide cylinder 508.

In this case, in order to prevent the cargo container 507 from being disengaged from the dump frame 502 at that time, as shown in Fig. 27 wherein a cross sectional view of a main girder 509 provided on the back of the cargo container 507 is shown, the main girder 509 is constituted from a main frame 510 of a U-shaped section and a subsidiary frame 511 provided on an inner side of the main frame 510. An upper portion of the dump frame 502 is inserted between the subsidiary frame 511 and a lower portion of the main frame 510. Upper and lower support members 512 and 513 are provided on and under the upper portion of the dump frame 502, respectively. The subsidiary frame 511 is slidably supported by the upper support member 512, and the lower portion of the main frame 510 is in contact with the lower support member 513. In this way, the cargo container 507 is prevented from springing up.

The cargo container 507 is provided with a tailgate 514 at its rear end. The cargo container 507 is closed at the rear end by locking upper and lower portions of the tailgate.

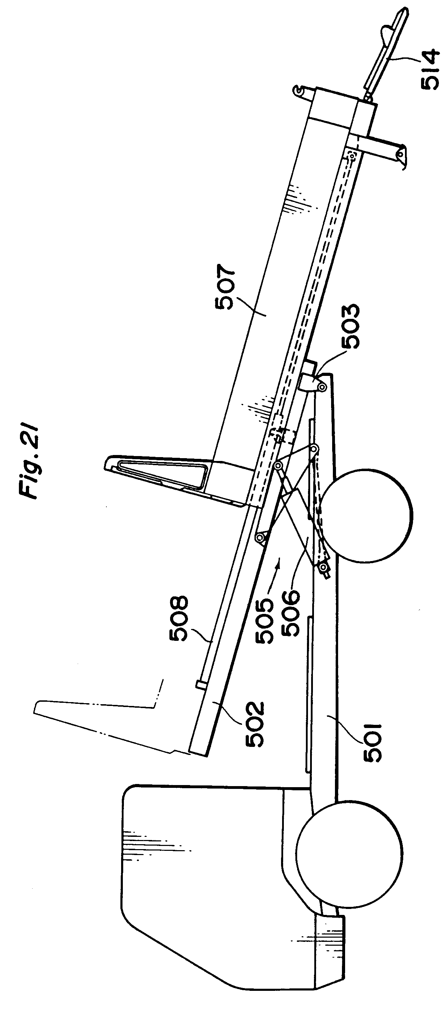

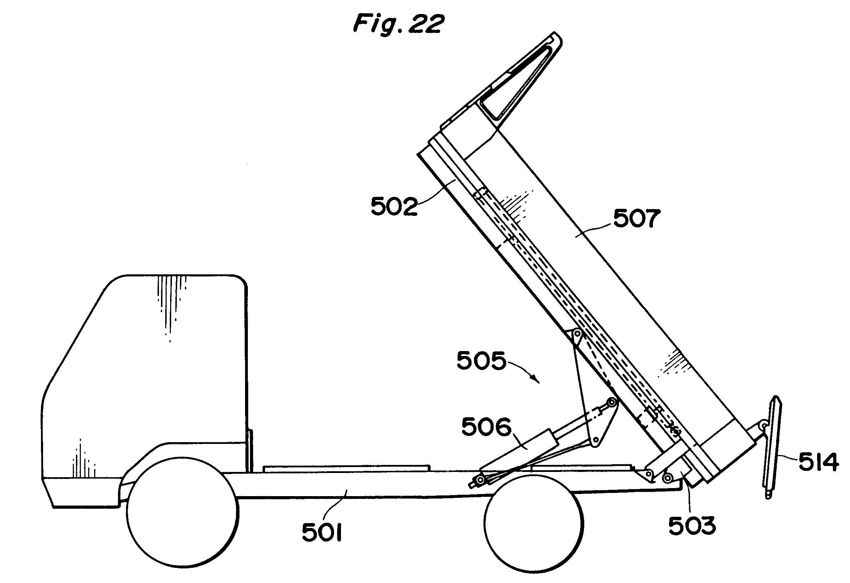

As shown in Figs. 21 and 22, when either of the upper and lower lockings is released, the tailgate 514 can be turned to be opened. Particularly in the case of releasing the upper locking (Fig. 21), the tailgate 514 serves as a footboard.

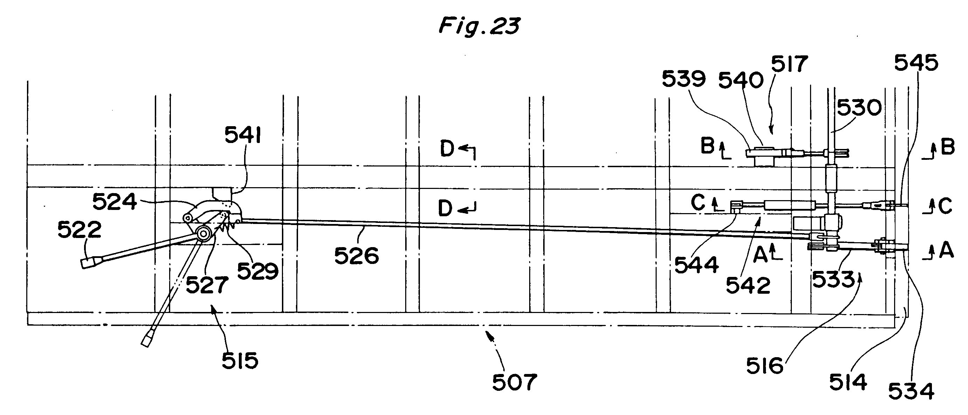

In Fig. 23, a reference numeral 515 designates an operation device provided below the cargo container 507, which device is arranged to operate a tailgate locking device 516 and a backward slide prevention device 517 for the cargo container 507 which are provided below a rear part of the dump frame 507.

The following describes the operation device 515 with reference to Figs. 23, 28, 29, and 30. A hanging shaft 518 is provided on the back of the cargo container 507, and a first short pipe 519 and a second short pipe 520 are fitted about the shaft 518. A pin 521 pierces the shaft 518 for preventing the short pipes 519 and 520 from falling off.

An operation lever 522 and an arm 523 are fixed to the first short pipe 519. A bell crank 524 is pivotably supported on a free end of the arm 23. A rod 526 extending backward is connected to the bell crank 524 through a spring tube 525.

A control arm 527 is fixed to the second short pipe 520, and a roller 527' is pivotably supported at a free end of the control arm 527.

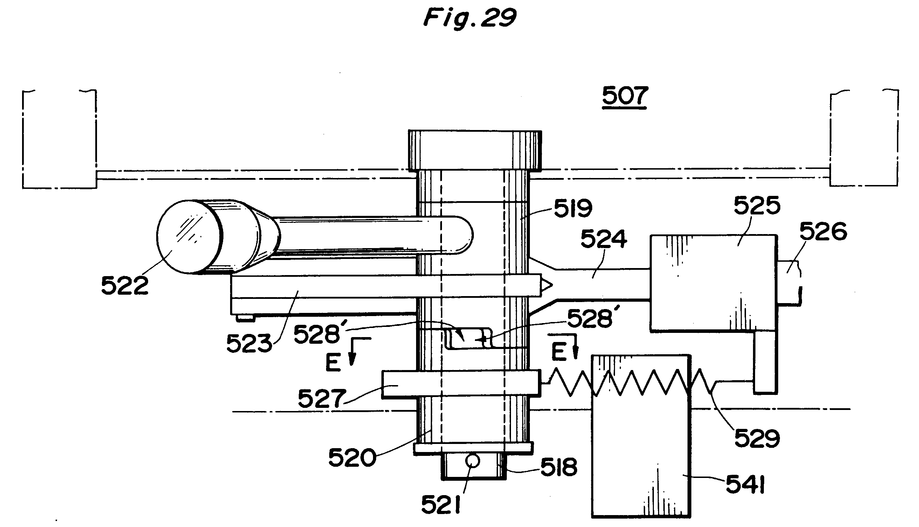

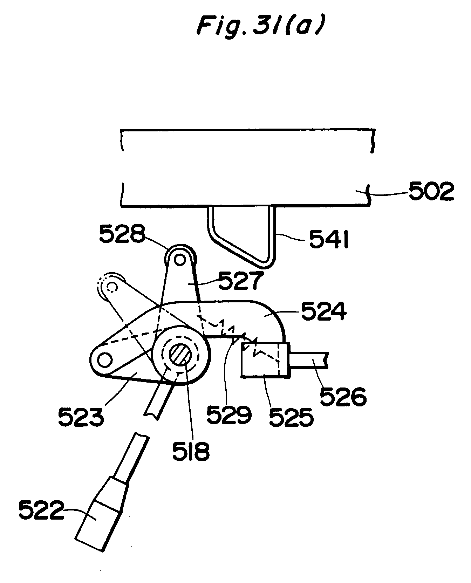

As shown in Figs. 29 and 30, there are formed notches 528', 528' respectively at a lower end of the first short pipe 519 and an upper end of the second short pipe 520. Also, the control arm 527 is at all times forced backward by a spring 529 disposed in the spring tube 525. Thereby, when the control lever 522 is turned counterclockwise as shown in Fig. 23, the control arm 527 is turned counterclockwise, but even when the control arm 527 is turned counterclockwise, the control lever 522 is not turned counterclockwise.

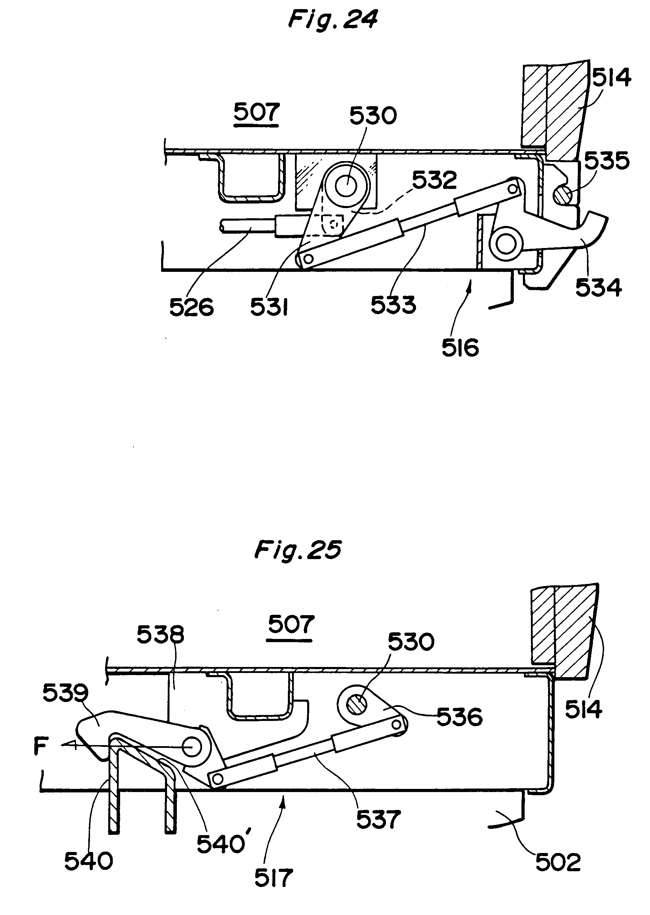

The following describes the tailgate locking device 516 referring to Fig. 24. A connecting shaft 530 extending in a lateral direction is provided on the cargo container 507. Two arms 531 and 532 are fastened to the connecting shaft 530. A rod 526 extending from the operation device 515 is connected to a free end of one arm 532, while a subsidiary rod 533 extending backward is connected with a free end of the other arm 531.

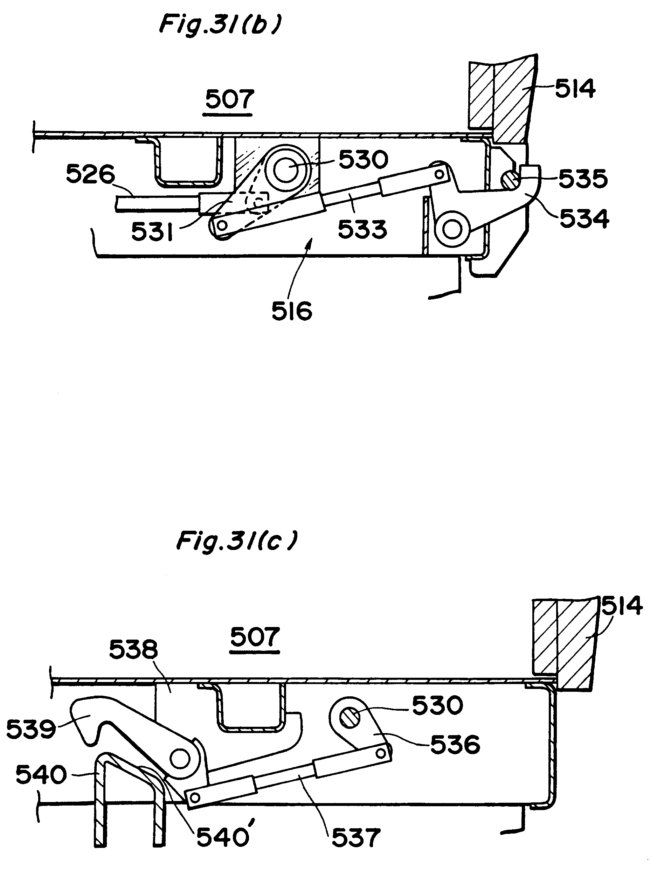

The subsidiary rod 533 is provided with a hook 534 so that when the control lever 522 is in a state as shown by a solid line in Fig. 23, the hook 534 becomes disengaged from a pin 535 of the tailgate 514 as shown in Fig. 24 and when the control lever 522 is turned backward (to come to a state as shown by a two-dot chain line in Fig. 23), the hook becomes engaged with the pin 535 (Fig. 31(b)).

When the hook 534 is disengaged, the operation lever 522 is located inside the cargo container 507, and when the hook 534 is engaged, the operation lever 522 laterally projects outside the cargo container 507. Therefore, by looking at the operation lever 522, whether the hook 534 is engaged or not can be known.

The backward slide prevention device 517 is now described referring to Fig. 25. An arm 536 is fastened on the connecting shaft 530 with its free end being connected with an subsidiary rod 537 extending forward, and a hook 539, which is pivotably supported on a bracket 538, is connected to this subsidiary hook 537.

The hook 539 is arranged to become engaged with an engagement member 540 fixed to the dump frame 502 at the foremost slide position of the cargo container 507, and when the operation lever 522 is further turned backward from the position indicated by a solid line in Fig. 23, the engagement is released and the hook 539 is held disengaged by a dead point method of the operation device 515.

Furthermore, when the hook 539 is engaged, a shaft support point of the hook 539 is adapted to be positioned on a line extending in a direction F in which a force acts on the hook 539 so that the subsidiary rod 537, etc. are not subject to an external force.

In Figs. 23, 28, 29, 30, and 31, a reference numeral 541 designates a control member fixed to the dump frame 502 close to the operation device 515. When the cargo container 507 is slid backward with the operation lever 522 placed in the position indicated by a solid line in Fig. 31(a) (in a state where the backward slide prevention means is released), the control arm 527 becomes into contact with the control member 541 and is turned up to the position indicated by the two-dot chain line, and when the control arm 527 passes the control member 541, the control arm 527 is caused to return to the solid line position by the spring 529.

In this case, because both short pipes 519 and 520 are provided with the notches 528', 528', the operation lever 522 is held at the position indicated by a solid line.

Furthermore, when the cargo container 507 is slid forward while the control arm 527 is in the position as indicated by a solid line in Fig. 31(a), the control arm 527 comes into contact with the control member 541 and is turned clockwise. The operation lever 522 is also turned to return the hook 539 of the backward slide prevention means 517 to the engagement position.

At that time, the hook 539 returns before it reaches the engagement position with the engagement member 540, but since the hook 539 is guided to the engagement position by a slope 540' of the engagement member 540, it is securely engaged with the engagement member 540.

In Figs. 23 and 23, a reference numeral 542 indicates an automatic opening & closing device for the tailgate 514. The device 542 is provided on the cargo container 507 as shown in Fig. 26. When the cargo container 507 is tilted about 8°, the bell crank 543 is detached from a contact member 544 on the chassis 501 so that the hook 545 can be released from the engagement with an engagement piece 546 of the tailgate 514. When the cargo container 507 is retracted, the bell crank 543 is controlled by the contact member 544 so as to engage the hook 545 with the engagement piece 546.

The truck being constructed as described above, the operation will be described below.

In the case of loading or unloading of vehicles, the operation lever 522 is turned backward (see Fig. 31(a)) from the state indicated by a solid line in Fig. 23 while the truck is in the state as shown in Fig. 20. Thereby, the tailgate locking device 516 locks the tailgate 514 (Fig. 31(b)) and the backward slide prevention device 517 is disengaged.

Then, the dump frame 502 is tilted about 14° by the lifting device 505. Thereafter, the cargo container 507 is slid backward by the slide cylinder 508. After completion of the backward sliding movement, the tailgate 514 is turned so as to serve as a footboard for the loading or the unloading of vehicles.

In this case, the control arm 527 comes into contact with the control member 541 and is turned to a position indicated by a one-dot chain line in Fig. 31(a). After that, the control arm 527 is returned to the solid line position by the spring 529. During that period the operation lever 522 is not moved because of the presence of the notches 528', 528'.

After completion of loading and/or unloading of vehicles, the tailgate 514 is retracted and then, by contracting the slide cylinder 508, the cargo container 507 is slid forward.

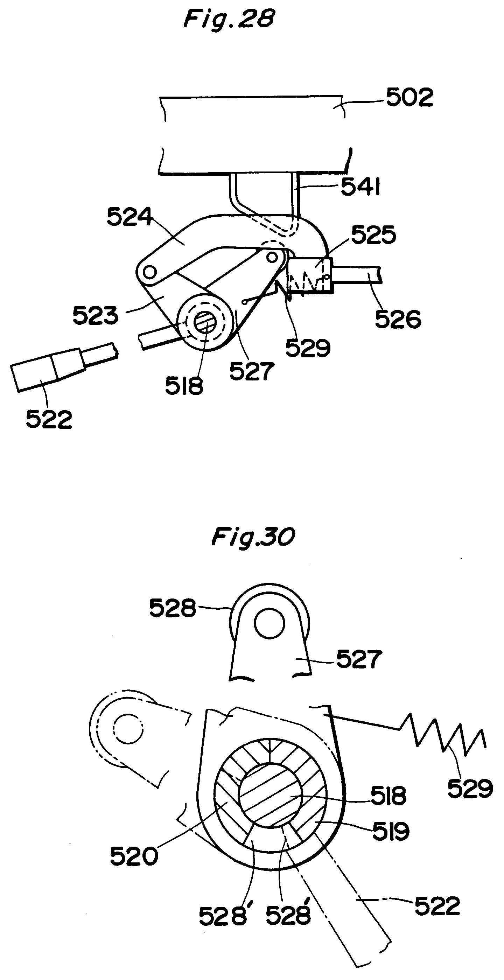

Immediately before the cargo container 507 reaches the foremost position, the control arm 527 comes into contact with the control member 541 and is turned clockwise to the position shown in Fig. 28.

The first short pipe 519 is also turned clockwise by the turn of the control arm 527, and the hook 534 of the tailgate locking device 516 is disengaged as shown in Fig. 24, while the hook 539 of the backward slide prevention device 517 is returned to the engaged state as shown in Fig. 25.

After the cargo container 507 reaches the foremost position, the tilt cylinder 506 is contracted to retract the cargo container 507.

On the other hand, in the case of transporting earth, sand, or the like, if the dump frame 502 is tilted by the lifting device 505 without operating the operation lever 522, the cargo container 507 can be tilted in a state that it is securely fixed to the dump frame 502 by the backward slid prevention device 517. Furthermore, the tailgate locking device is released from locking, and when the inclination reaches about 8°, the automatic opening & closing device 542 is also released from engagement, thereby the tailgate is opened and earth, sand, etc. can be discharged.

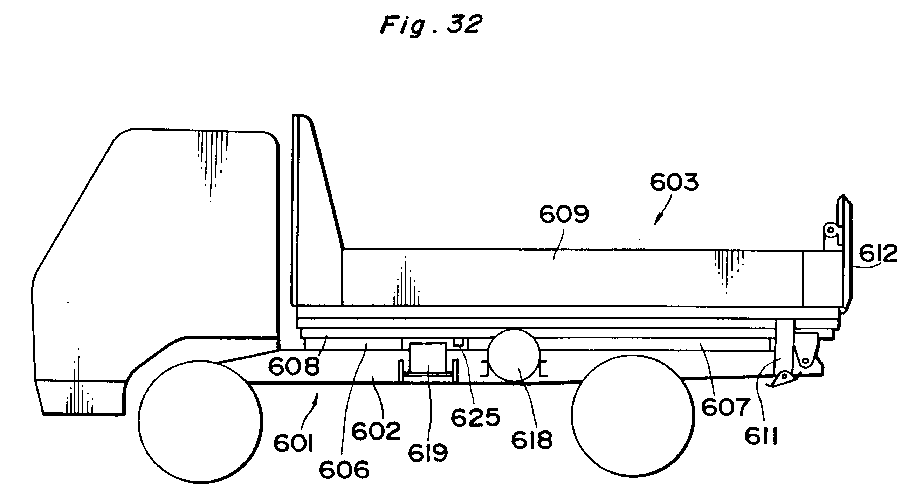

Figs. 32 to 36 show a further advantageous dump truck having a piping protection device.

Fig. 32 is a general view of a car carrier truck used also as a dump truck, wherein a reference numeral 601 designates a chassis having a pair of chassis frames 602, 602 on opposite sides of the chassis, and a cargo container 603 is tiltably mounted on the chassis 601.

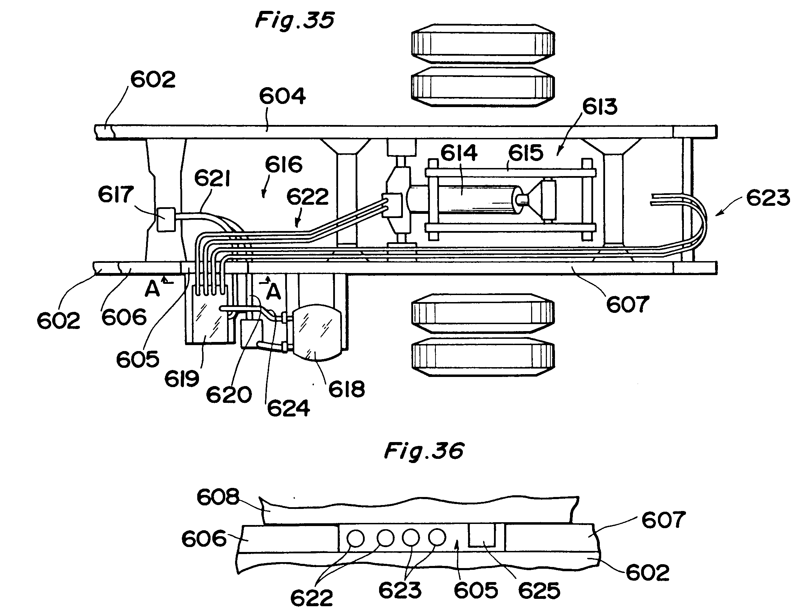

As shown in Fig. 35, a long bearer 604 is mounted on one of the pair of chassis frames 602, 602, while two bearers, a front bearer 606 and a rear bearer 607, having a clearance 605 inbetween is provided on the other of the chassis frames. A reference numeral 608 designates a dump frame constituting part of the cargo container 603. The dump frame 608 is pivoted on a rear portion of the chassis 601 so as to be tiltable. Also, the dump frame 608 is adapted to come into contact with upper surfaces of the bearers 604, 606 and 607 when lowered.

In Figs. 32 to 34, a reference numeral 609 designates a cargo container body constituting part of the cargo container 603, and the cargo container body 609 is adapted to tilt integrally with the dump frame 608 and also slide backward on the dump frame 608 by a slide cylinder 610 mounted on the dump frame 608.

When the cargo container body 6 is slid backward, support legs 611 provided in the rear portion of the cargo container body 609 are grounded. If the tailgate serving as a footboard is opened, the truck can get loaded with construction vehicles of a crawler type (for example, shovel dozers).

A reference numeral 613 designates a tilting device 613 for tilting the cargo container 603. The tilting device 613 is constituted from a cylinder 614 and a plurality of frames 615 and is arranged between the pair of chassis frames 602, 602 (see Fig. 35).

In Fig. 35, a reference numeral 616 designates a drive device 616 for actuating the tilting device 613 and the slide cylinder 610. The drive device 616 is constituted from a pump 617 driven by a travel engine (not shown) and a tank 618 for accommodating oil, and a valve 619 for changing over oil paths. The pump 617 is disposed between the chassis frames 602 and 602, and the tank 618 and the valve 619 are disposed outside of the chassis frame 602.

Piping 620 between the pump 617 and the tank 618 and piping 621 between the pump 617 and the valve 619 are respectively disposed below the chassis frame 602 and connected. On the other hand, piping 622 between the valve 619 and the cylinder 614 of the tilting device 613 and piping 623 between the slide cylinder 610 and the valve 619 are passed through the clearance 605 between the front and rear bearers 606, 607 in parallel and connected, as shown in Figs. 35 and 36, because those pipings 622 and 623 have to be connected onto an upper surface of the valve 619. Here, a reference numeral 624 designates piping for communicating the oil tank 618 with the valve 619.

In Fig. 36 which shows a sectional view taken along the line A-A in Fig. 35, a reference numeral 625 designates a stopper member for maintaining a clearance between the chassis frame 602 and the dump frame 608. The stopper member 625 is a little smaller in height than the bearer 607 and larger in diameter than the pipings 622, 623. Also, the stopper member 625 is vertically provided on the back of the dump frame 608 so as to confront the upper surface of the chassis frame 602 between the front and rear bearers 606 and 607.

It is to be noted here that although the description is made of a dump truck wherein the cargo container body is slidable, even in the case of a dump truck wherein the cargo container is constructed from only a cargo container body and has no dump frame, a similar effect is obtained, and in this case, the stopper member should be provided on the cargo container body.

Moreover, part of the drive device arranged outside the chassis frame is not limited to the present embodiment, but any part of the drive device may be arranged outside the chassis frame to offer a similar effect.

Furthermore, the installation position of the stopper member is not limited to the cargo container side. A similar effect can be obtained if the stopper member is installed on the chassis side.

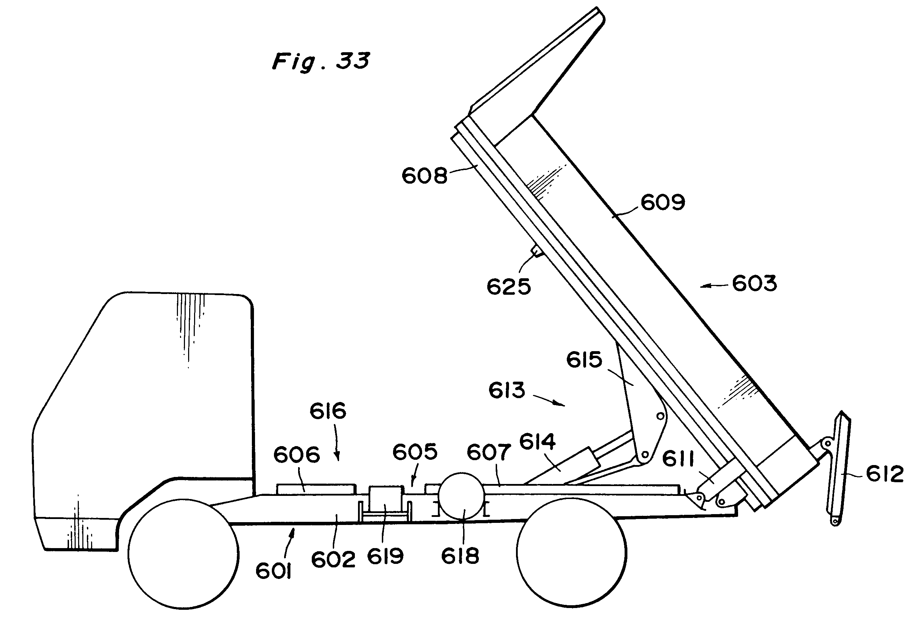

Next, operation of the truck is described. First, in the case of dumping loaded earth and sand, the valve 619 is switched so that pressure oil in the pump 617 is supplied to the cylinder 614 through the piping 621, the valve 619, and the piping 622, whereby the tilting device 613 is actuated to cause the cargo container 603 to be fully tilted (about 50° to 60°), as shown in Fig. 33. After completion of dumping, the cargo container 603 is lowered by its own weight, etc. and stopped upon contact of the dump frame 608 with the bearers 604, 606 and 607.

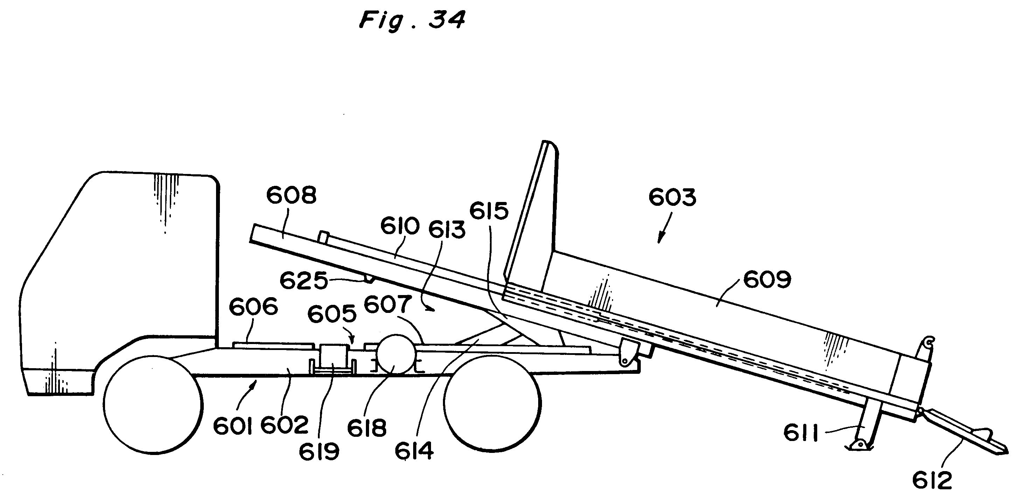

On the other hand, in the case of loading construction vehicles, the valve 619 is changed over so that the cargo container 603 is tilted by a predetermined angle (about 15°). Then, the valve 619 is again changed over so that the slide cylinder 610 is extended to caused the cargo container body 609 to slidingly move backward as shown in Fig. 34. In this state, construction vehicles are loaded. After completion of a loading operation, an operation is carried out in the reverse order of the above operation so that the dump frame 608 is lowered till the the dump frame 608 comes into contact with the bearers 604, 606 and 607, and stop.

Meanwhile, when the operation is repeated for a long year, there are instances where the bearers 606 and 607 are deformed and decrease in height. In such a case, a lower end of the stopper member 625 contacts the upper surface of the chassis to restrict a further drop of the cargo container 603 and thereby prevent pipings 622 and 623 from being damaged.

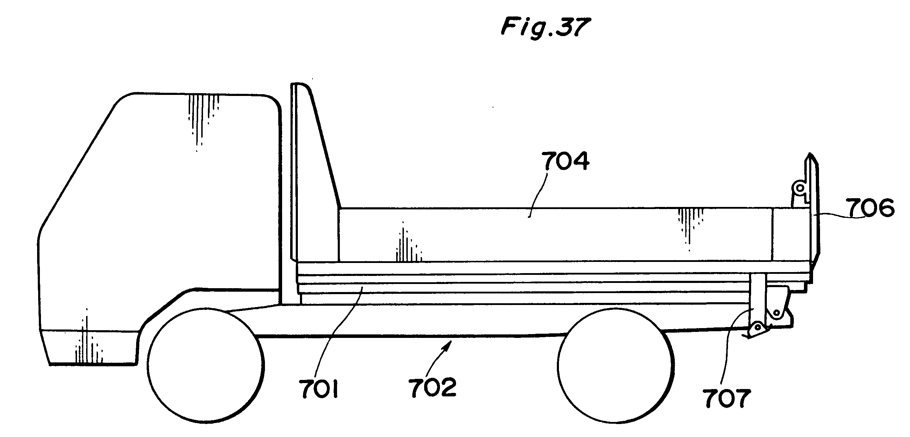

Now reference is made to a rolling prevention device for a cargo container of a further advantageous car carrier truck. Fig. 37 shows the advantageous car carrier truck. In Fig. 37, a reference numeral 701 indicates a pair of dump frames 701 provided on a chassis 702, and the dump frames 701 are adapted to be tilted by a tilting device 703 provided between the dump frames 701 and the chassis 702.

A load-carrying platform 704 for carrying vehicles such as backhoes and shovel dozers is mounted on the dump frames 701 in such a manner that the load-carrying platform 704 can be longitudinally moved. The load-carrying platform 704 is longitudinally moved by a cylinder 705 which is a sliding device provided between the dump frames and the load-carrying platform 704. Furthermore, the load-carrying platform 704 is provided with a tailgate 706 which serves also as a footboard, and is also provided with support legs 707 at its lower rear portion.

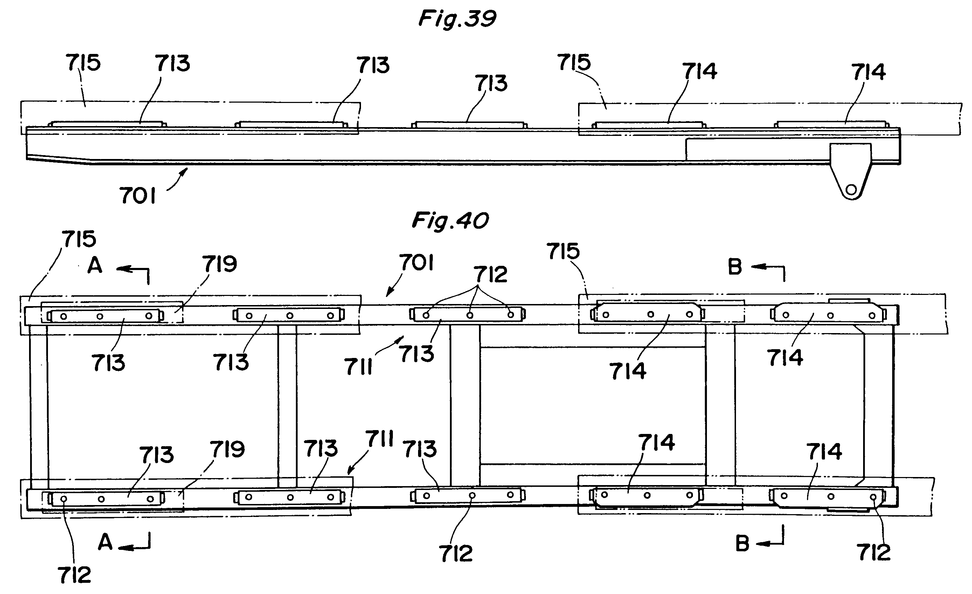

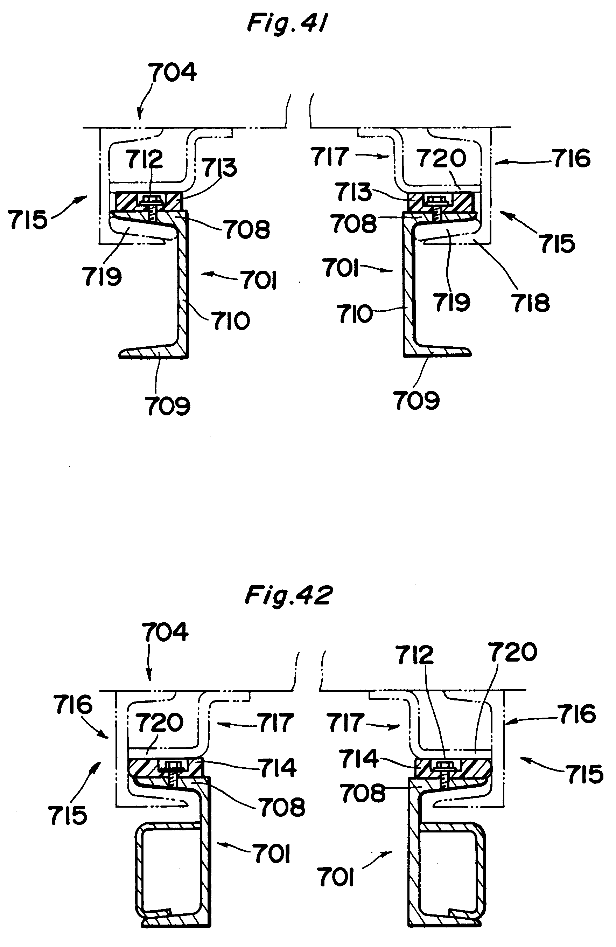

As shown in Figs. 41 and 42, the dump frame 701 is of a U-shaped section having upper and lower horizontal portions 708 and 709 and a vertical portion 710. As shown in Fig. 40, a plurality of fixed pads 711 are fastened to the upper horizontal portion 708 of the dump frame 701 with bolts 712 at intervals.

The fixed pads 711 are formed of synthetic resin of a small friction coefficient. The fixed pads 711 consist of front fixed pads 713 and rear fixed pads 714. The rear fixed pads 714 support the load-carrying platform 704 when the load-carrying platform 704 has moved to a rearmost position (a position indicated by a two-dot line in Figs. 39 and 40). The rear fixed pads 714 are shaped so as to project laterally outward from the upper horizontal portion 708 of the dump frame 701 (see Fig. 42). On the other hand, the front fixed pads 713, which are located in front of the rear fixed pads 714, are shaped so as not to project laterally outward from the upper horizontal portion 708 of the dump frame 708 (see Fig. 41). Because of this shape, when the load-carrying platform 704 is moved forward, the front fixed pads 713 do not hit front ends of the main girders 715 provided on the back of the load-carrying platform 704 oppositely to the dump frames 701.

The main girder 715 consists of, as shown in Fig. 41, a main girder body 716 of a U-shaped section and an subsidiary girder 717 provided inside of the main girder body 716.

A moving pad 719 made of synthetic resin of a small friction coefficient is fixed to a front upper surface of the lower horizontal portion 718 of the main girder body 716. The moving pad 719 is adapted to slidingly contact the vertical portion 710 of the dump frame 701 to prevent a front portion of the load-carrying platform 704 from rolling. An upper surface of the moving pad 719 is adapted to contact with a lower surface of the upper horizontal portion 708 of the dump frame 701 to prevent the load-carrying platform 704 from rising. A horizontal portion 720 of the subsidiary girder 717 is adapted to slide on the fixed pads 713 and support the load-carrying platform 704.

Furthermore, the rear fixed pads 714 are adapted to slidingly contact with a side surface of the main girder body 716, as shown in Fig.42, so as to prevent the load-carrying platform 704 from rolling.

It is to be noted that although the truck of the present embodiment has been described as a car carrier truck, if the load-carrying platform is fastened onto the dump frame by a sliding device or any other fixing means, the truck can be also used as a dump truck.

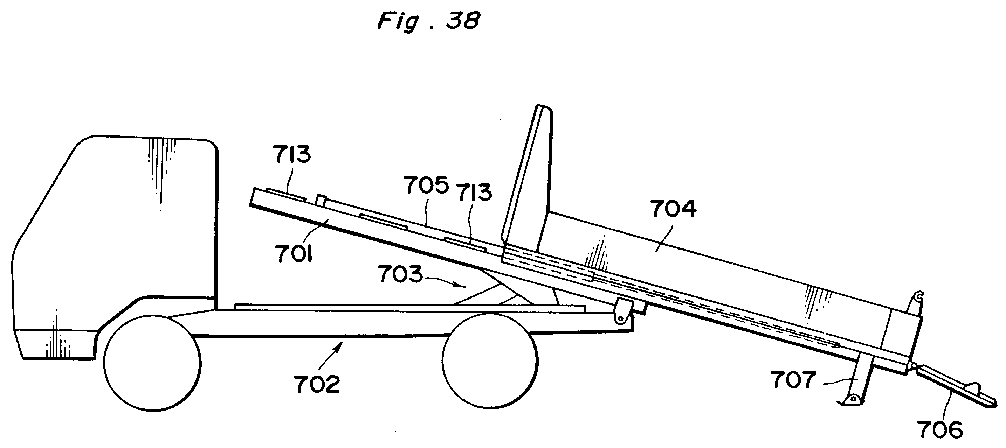

Next, operation of the truck will be described. The tilting device 703 is operated when in a state as shown in Fig. 37, so that the dump frames 701 are tilted by a predetermined angle (about 15°). Then, the cylinder 705 is extended so that the load-carrying platform 704 is moved to the rearmost position and the support legs 707 are grounded. After the grounding of the support legs 707, the tailgate 707 serving also as a footboard is turned as shown in Fig. 38. In the state shown in Fig. 38, vehicles are driven onto the load-carrying platform 704 so that they are loaded on the load-carrying platform 704. After loading of the vehicles, the tailgate 706 is closed from the state shown in Fig. 38 and the load-carrying platform 704 is moved forward by the cylinder 705.

After the load-carrying platform reaches the foremost position, the dump frames 701 are lowered and returned to the state sown in Fig. 37. The truck is driven to the destination in that state. In the case of unloading vehicles, a similar operation is carried out.

Meanwhile, there are instances where the load-carrying platform 704 is going to roll during the operation. But, because the lateral movement of the load-carrying platform 704 is restricted by the moving pads 719 and the rear fixed pads 714, rolling of the load-carrying platform 704 can be prevented at all times.

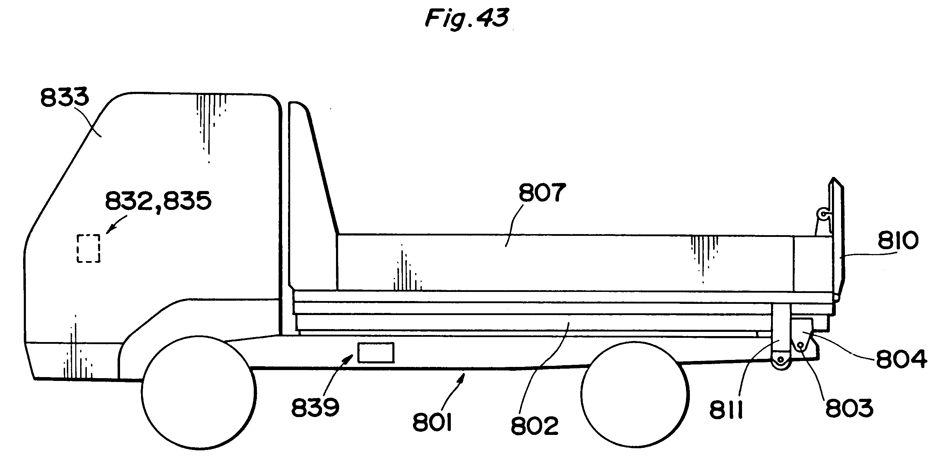

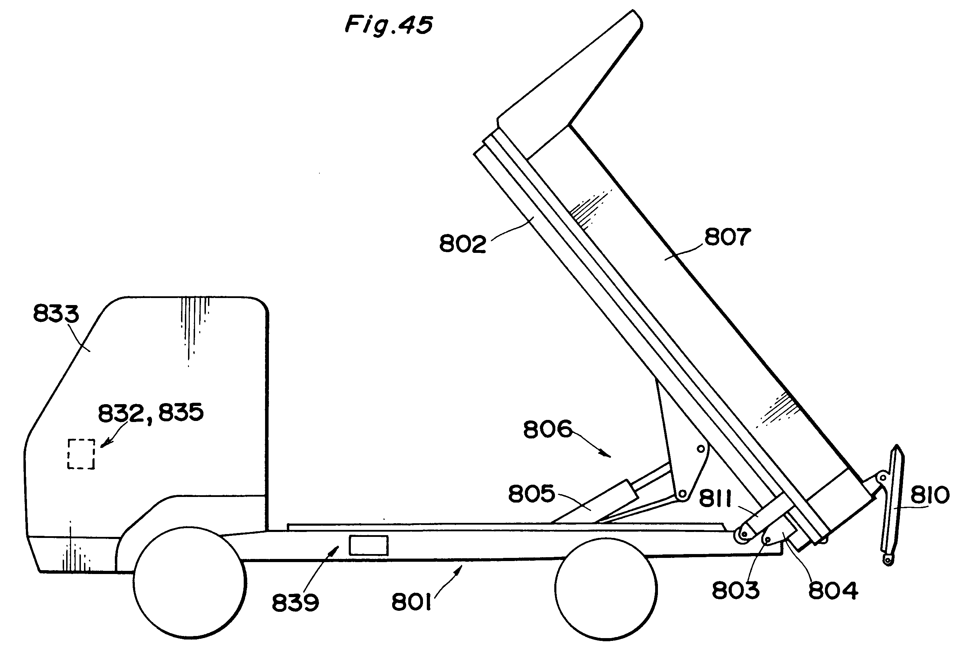

Figs. 43 to 49 show a further advantageous car carrier truck used also as a dump truck.

Fig. 43 is a general view of this truck. A reference numeral 801 designates a chassis. A dump frame 802 is mounted on the chassis 801, and the dump frame 802 is tiltably supported through a hinge shaft 803 fastened on the chassis 801 and a hinge bracket 804 fastened on the dump frame 802.

There is provided a tilting device 806 having a tilt cylinder 805 between the chassis 801 and the dump frame 802. The dump frame 802 is caused to tilt by the tilting device 806.

A load-carrying platform 807 is provided on the dump frame 802 in such a manner that the load-carrying platform 808 can be longitudinally moved. A sliding device 809 having a slide cylinder 808 provided between the dump frame 802 and the load-carrying platform 807 is adapted to make the load-carrying platform 807 slide longitudinally.

The load-carrying platform 807 is provided with a tailgate 810 serving also as a footboard in the rear. The load-carrying platform 807 is also provided with load-carrying platform support legs 811 in the rear.

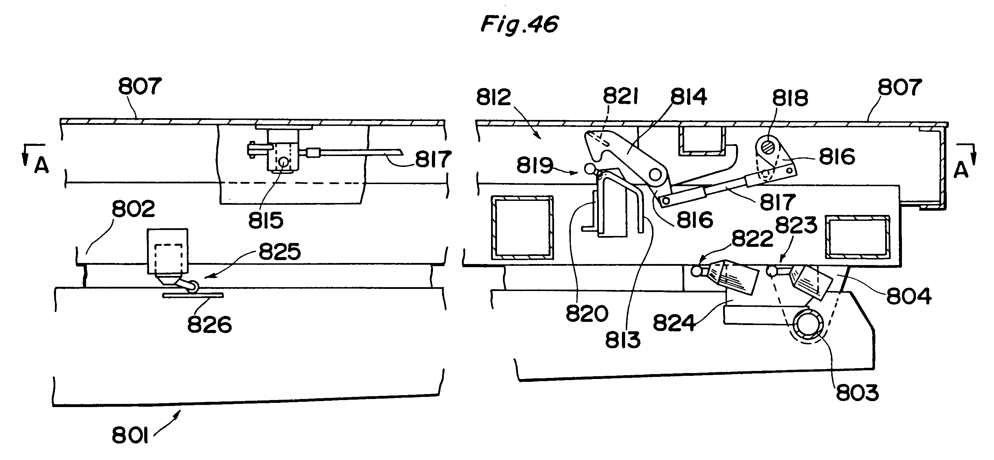

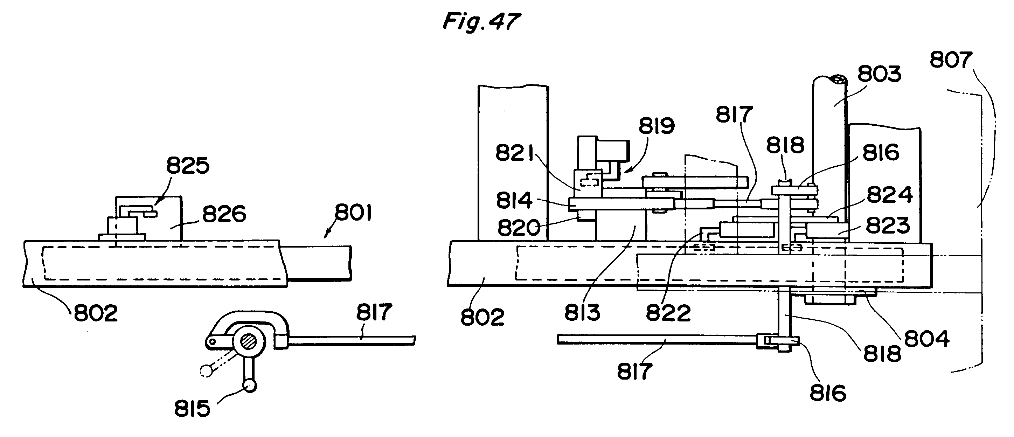

A reference numeral 812 designates a locking device for locking the load-carrying platform 807 onto the dump frame 802 when the truck is used as a dump truck. The locking device 812 includes, as shown in Figs. 46 and 47, an engagement piece 813 fastened on the dump frame 802, a hook 814 pivotably supported on the load-carrying platform 807 so as to engage with the engagement piece 813, an operation lever 815 rotatably provided on the load-carrying platform 807. The operation lever 815 is connected to the hook 814 through arms 816, rods 817 and a shaft 818 supported on the load-carrying platform 807 so that when the operation lever 815 is turned forward relative to the load-carrying platform 807, the hook 814 becomes engaged with the engagement piece 813 to lock the load-carrying platform 807 onto the dump frame 802, and when the operation lever 815 is turned backward, the locking is released.

The following describes various detectors, referring to Figs. 46 and 47. A reference numeral 819 designates a first detector for detecting a locking state of the locking device 812. The first detector 819 is mounted on the engagement piece 813 through a bracket 820 and is adapted to be turned "on" at the locking state and "off" at the unlocking state by means of a regulating plate 821 projecting from the hook 814.

Reference numerals 822 and 823 are second and third detectors for detecting a tilting angle of the dump frame 802. The second and third detectors are mounted on a mounting member 824 fixed to the hinge shaft 803 so as to detect the tilting angle by contacting the dump frame 802. Particularly, the second detector 822 is adapted to be turned "on" when the dump frame tilts above a lower limit angle (about 8°) wherein the load-carrying platform 807 is slidable, and the third detector 823 is adapted to become "off" when an upper limit angle (about 20°) is exceeded.

A reference numeral 825 designates a fourth detector mounted on the dump frame 802 for detecting a tilting state of the dump frame by contacting a bracket 825 provided on the side of the chassis 801. The fourth detector 825 is adapted to become "off" only when the dump frame 802 is not tilted (at 0°).

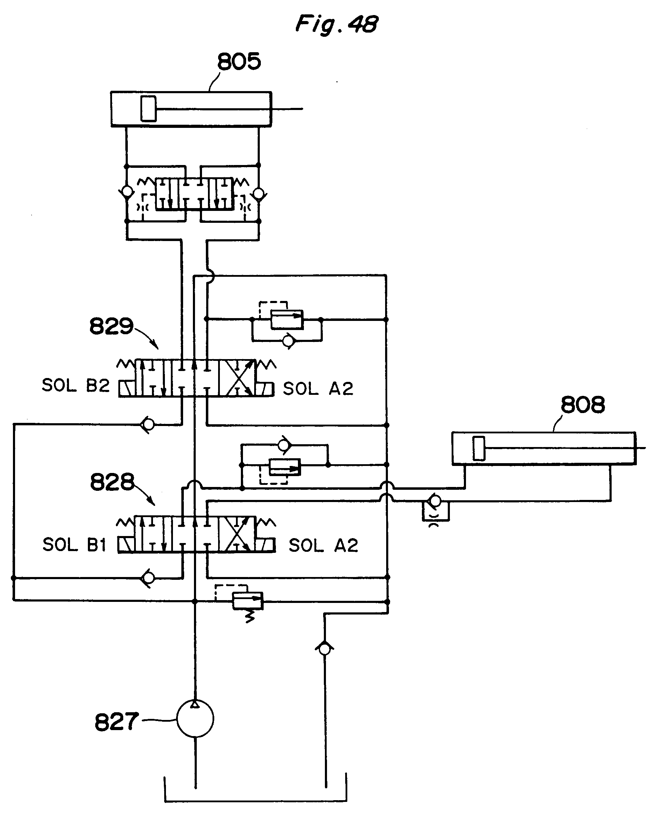

The following describes a hydraulic circuit, referring to Fig. 48. Hydraulic oil is supplied from an oil pump 827 to a tilt cylinder 805 and a slide cylinder 808. The slide cylinder 808 is extended by the operation of a first change-over valve 828 and the tilt cylinder 805 is contracted by the operation of a second change-over valve 829.

The first change-over valve 828 is switched by solenoids SOL A1 and SOL B1 so that when the solenoid SOL A1 is energized, the slide cylinder 808 is extended, while the solenoid SOL B1 is energized, it is contracted.

The second change-over valve 829 is switched by solenoids SOL A2 and SOL B2 so that the tilt cylinder 805 is extended when the solenoid SOL A2 is energized, and contracted when the solenoid SOL B2 is energized.

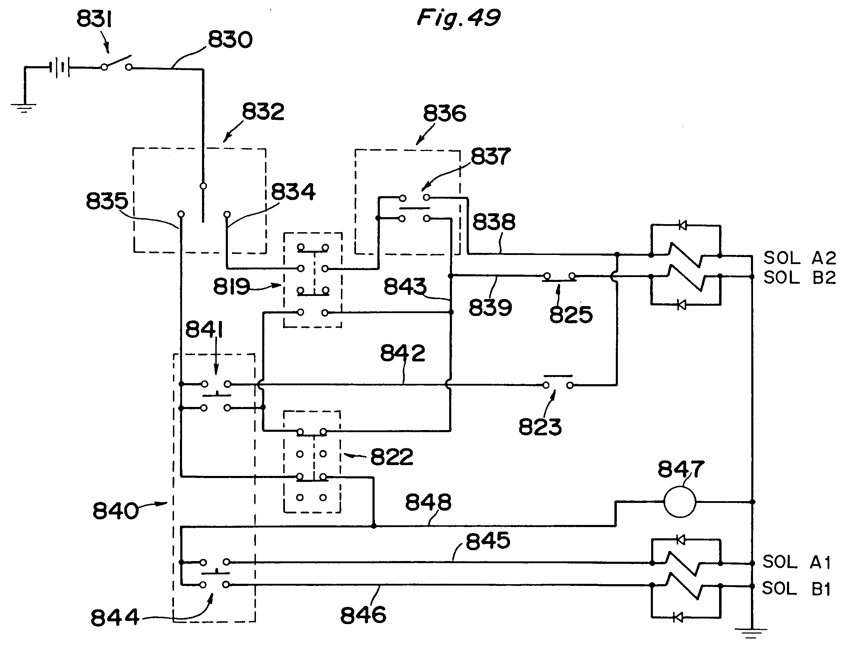

Next, an electric circuit will be described with reference to Fig. 49. A main switch 831 and a selection switch 832 are provided on a main circuit 830.

The main switch 831 is provided in a cab 833 and can be used also as an engine switch.

The selection switch 832 is provided in the cab 833. Either a dump operation circuit 334 or a slide operation circuit 835 can be selected by the selection switch.

The dump operation circuit 834 has the first detector 819 and a tilt switch 837 which is a switch device 836 installed within the cab 833 for the dump operation. The tilt switch 837 is connected to the solenoid SOL A2, thus constituting a lifting circuit 838. On the other hand, the tilt switch 837 is connected to the solenoid SOL B2 through the fourth detector 825, thus constituting a lowering circuit 839.

The slide operation circuit 835 has a switch device 840 provided on the side of the chassis 801 for the slide operation. A tilt switch 841 which is part of the switch device 840 is connected to the lifting circuit 838 through the third detector 823, thus constituting a subsidiary lifting circuit 842.

Also, a subsidiary lowering circuit 843 wherein the first detector 819 and the second detector 822 are connected in parallel is connected to the lowering circuit 839.

The switch device 840 has another slide switch 844. An extending circuit 845 is connected between the slide switch 844 and the solenoid SOL A1 and a contracting circuit 846 is connected between the slide switch 844 and the solenoid SOL B1.

Furthermore, upstream of the slide switch 844, the second detector 822 is provided and a warning circuit 848 with a buzzer 847 branches.

It is to be noted here that although the locking device is arranged to be manually operated in the present embodiment, it is also possible to adapt the locking device so that when the load-carrying platform reaches the foremost position, the control member on the dump frame is contacted so that an automatic locking is effected.

This truck being constituted as described above, the operation thereof will be described below.

First, in the case that the truck is used as a dump truck, the operation lever 815 of the locking device 812 is turned forward as indicated by a one-dot chain line in Fig. 47 so as to lock the load-carrying platform 807 onto the dump frame 802.

The above operation may be performed after use of the truck as a car carrier truck.

Thereafter, after the main switch 831 is turned on in the cab 833, the selection switch 832 is turned to the dump operation circuit 834 side, and the tilt switch 837 is turned to the lifting circuit 838 side.

Because the first detector 819 is "on", the solenoid SOL A2 is energized, whereby the second change-over valve 829 is changed over so that the tilt cylinder 805 is extended and the load-carrying platform 807 is tilted integrally with the dump frame 802.

In this case, when the locking device 812 is not in the locking state, the solenoid SOL A2 is not energized because of the "off" state of the first detector 819, whereby the load-carrying platform 807 is prohibited from tilting.

In the case of lowering the load-carrying platform 807, when the tilt switch 836 is switched to the lowering circuit 839 side, the solenoid SOL B2 is energized, whereby the tilt cylinder 805 is contracted to lower the load-carrying platform 807. When the load-carrying platform 807 becomes retracted, the fourth detector is turned off and the solenoid SOL B2 is deenergized.

Next, in the case that the truck is used as a car carrier truck, first, the selection switch 832 is operated in the cab to be switched to the slide operation circuit 835 side. Then, the operation lever 815 of the locking device 812 is turned backward as indicated by a solid line in Fig. 47 in the outside of the cab so as to release the locking device 812 from the locking operation.

Thereafter, the tilt switch 841 of the slide operation switch device 840 is turned to the subsidiary lifting circuit 842 side.

Because the third detector 823 on the subsidiary lifting circuit 842 is "on", the solenoid SOL A2 is energized to change over the second change-over valve 829 whereby the tilt cylinder 805 is extended so as to tilt the load-carrying platform 807.

The operator turns the tilt switch 841 off to stop the load-carrying platform 807 from tilting when the operator presumes by an eye-measurement that the load-carrying platform has tilted almost up to the upper limit angle (about 20°).

In this case, even if the tilt switch 841 is left in an "on" state due to a wrong eye measurement of the operator, when the dump frame 802 reaches the upper limit angle, the third detector 823 is turned off and the solenoid SOL A2 is deenergized, thereby the tilting of the load-carrying platform 807 is automatically stopped.

After the tilting is stopped, the slide switch 844 is again switched to the extending circuit 845 side.

By the switching to the extending circuit 845, the solenoid SOL A1 is energized so as to change over the first change-over valve 828, whereby the slide cylinder 808 is extended so as to move the load-carrying platform 807 backward on the dump frame 802.

It is to be noted that the above operations relate to the case where the tilting angle is above the predetermined lower limit angle (about 8°). In the case that the tilting angle is below the lower limit angle, because the second detector is "off", the solenoid SOL A1 is not energized and the backward movement of the load-carrying platform 807 is restricted.

By this arrangement, a state wherein the support legs 811 do not contact the ground when the load-carrying platform 807 is at its rearmost position can be avoided.

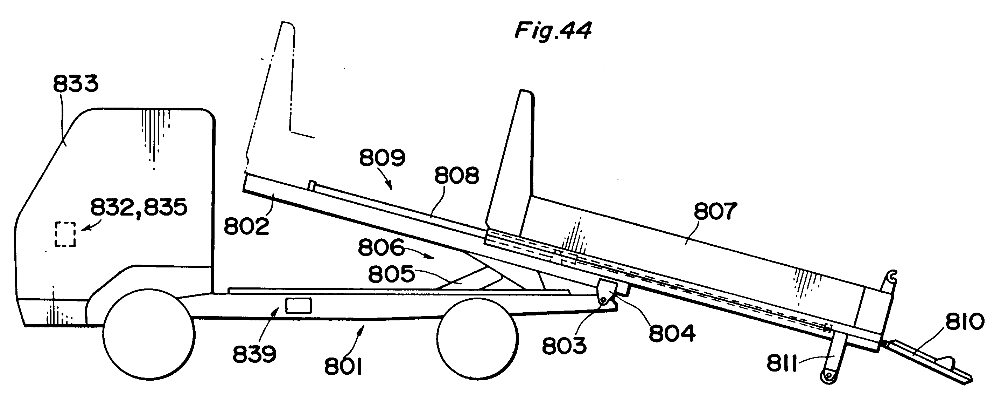

After the load-carrying platform 807 is moved to the rearmost position, the tailgate 810 is opened as shown in Fig. 44 so that vehicles are loaded.

It is to be noted here that when the load-carrying platform 807 is tilted over the lower limit angle, the warning circuit is also energized to sound the buzzer 847 to notify the surroundings that loading or unloading of vehicles is going to start and call their attention.

After completion of the loading or unloading operation, the tailgate 810 is closed from the state shown in Fig. 44. Then, the slide switch 844 is switched to the contracting circuit 846 side to energize the solenoid SOL B1, whereby the first change-over valve 828 is switched so that the slide cylinder 808 is contracted to move the load-carrying platform 807 forward.

After the load-carrying platform 807 has moved to the foremost position (a position indicated by a two-dot line in Fig. 44), the operation lever 815 of the locking device 812 is turned forward relative to the load-carrying platform 807 so that the load-carrying platform 807 is locked onto the dump frame 802. The first detector 819 is turned on.

In this state, if the tilt switch 841 is switched to the subsidiary circuit 843 side, the solenoid valve SOL B2 is energized, whereby the tilt cylinder 805 is contracted so as to lower the load-carrying platform 807 till the state shown in Fig. 43 is reached.

In this case, when the tilting angle of the load-carrying platform 807 becomes below the lower limit angle, the second detector 822 is turned "off", but because the first detector 819 is "on", the energization of the solenoid SOL B2 can be maintained by changing over the selection switch and the tilt switch.

According to the present invention, in a truck having a dumping function and a vehicle carrying function, when the truck is used as a dump truck, the load-carrying platform is securely locked to the dump frame and this locking is associated with unlocking of the tailgate, whereby accidents such as turnover of the truck are prevented. On the other hand, when the truck is used as a car carrier truck, rolling of the load-carrying platform during the loading or unloading of vehicles is prevented. Moreover, the load-carrying platform is locked so as not to be fully tilted, the sliding operation of the load-carrying platform is regulated in accordance with the tilting angle of the load-carrying platform. The truck of the present invention can be provided with such a safety mechanism and therefore offers a very high safety.

Furthermore, since the piping and chassis support legs are prevented from being damaged, the truck can be used safely and economically for a long period.

Moreover, the change-over between the tilting operation and the slide operation can be automatically made by a switch provided in the cab, the truck can be used with a high operation efficiency.

## Claims

1. A truck usable as a car carrier truck and as a dump truck, comprising:
a chassis (111; 202; 301; 601; 801),
a dump frame (104; 204; 402; 502; 701; 802) tiltably supported on said chassis (111; 202; 301; 601; 801) and having a vertical portion (104a) and a horizontal portion (104b),
a cargo container (117; 206; 307; 507; 603; 704) slidable longitudinally relative to said chassis (111; 202; 301; 601; 801),
a main girder (102; 207; 715) fixed to the bottom surface of said cargo container (117; 206; 307; 507; 603; 704) and extending in the longitudinal direction thereof and having a horizontal main girder portion (102b) and a vertical main girder portion (102a), and
a subsidiary girder (103) fixed to the bottom surface of said cargo container (117; 206; 307; 507; 603; 704) and extending in the longitudinal direction thereof,
said horizontal portion (104b) of the dump frame (104; 204; 402; 502; 701; 802) being sandwiched between said subsidiary girder and said horizontal main girder portion (102b),
**characterized** by
an upper sliding pad (105) for slidably supporting the cargo container (117; 206; 307; 507; 603; 704) fixed to an upper surface of said horizontal portion (104b) of said dump frame (104; 204; 402; 502; 701; 802); and
a lower sliding pad (110) slidable relative to a lower surface of said horizontal portion (104b) of said dump frame (104; 204; 402; 502; 701; 802) and fitted between stoppers (107, 108), which are fixed on an upper surface of the horizontal main girder portion (102b) for stopping the lower sliding pad (110) relative to the longitudinal direction.

2. A truck according to claim 1, further comprising:
traverse girders (208) connected to the main girder (207), intersecting perpendicular to the main girder; and
a second subsidiary girder (209) extending longitudinally and connecting center-side end portions of the traverse girders (208);
a cylinder device for sliding back and forth the cargo container (117),
wherein the second subsidiary girder (209) has an upward recess portion (209a) formed at a central portion thereof, and
the cylinder device (205) is disposed in the recess portion (209a).

3. A truck according to any of the preceding claims 1 or 2, further comprising:
a moving pad (719) slidable on the dump frame (104, 204, 701) which is fixed to the main girder (102, 207, 715) in a front position, where it is impossible for the cargo container (117, 206, 704) to be disengaged from the dump frame (104, 204, 701) when the cargo container (117, 206, 704) is moved to a rear most position;
a plurality of fixed pads (713, 714) being aligned on a top surface of the dump frame (104, 204, 701) at appropriated intervals; wherein
a side surface of a rear one (714) of the fixed pads (713, 714) which supports the cargo container (117, 206, 704) in a movement thereof to the rear most position projects from the dump frame (104, 204, 701) and contacts side surface of the main girder (102, 207, 715) so that the cargo container (117, 206, 701) is prevented from rolling by the moving pad (719) and the rear fixed pad (714).

4. A truck according to claim 1, **characterized** in that:
chassis support legs (316) are pivotable supported by the chassis (301) at rear portion of the chassis (301) so as to be able to swing back and forth;
cargo container support legs (315) are provided at rear portions of the cargo container (307) perpendicularly to the cargo container;
the chassis support legs (316) are forced at all times by spring members (317) in a protruding direction of the chassis support legs, and are held in a protruding condition by stopper members (318) provided on the chassis (310);
one of the cargo container support leg (315) and the chassis support leg (316) is provided with a guide piece (319); and
the other of the cargo container support leg (315) and the chassis support leg (316) is provided with a control member (320) for engaging with the guide piece (319) and retracting the chassis support leg (316) forward when the cargo container (307) slides forward.

5. A truck according to claim 4, **characterized** in that, the dump frame (402) is provided tiltably through hinge brackets (403),
chassis support legs (413) are provided at rear portions of the chassis (401) in such a manner that each chassis support leg has the same center of rotation that the hinge bracket (403) has;
the chassis support legs (413) are provided with respective guide pieces (415) and are also provided with respective springs (414) each of which is provided between each hinge bracket (403) and the dump frame (402) so as to urge the chassis support leg in a direction in which the chassis support leg protrudes;
load-carrying platform support legs (410) are provided at rear portions of the load-carrying platform (407) perpendicularly to the load-carrying platform;
the load-carrying platform support legs (41) are provided with respective engagement members (416) which are engaged with the respectve guide pieces (4415) and turn the respective chassis support legs (413) in a direction in whch the chassis support llegs are retracted; and
a stopper member (417) is provided at a rear portion of the chassis for restraining the chassis support legs (413) from turning when the chassis support legs are in their protruding positions.

6. A truck according to claim 1, **characterized** in that
the cargo container (507) is provided with a backward slide prevention means (517) and an operation means (515) for releasing the backward slide preventions means; and
the dump frame (502) is provided with a control means (541) for changing over the backward slide prevention means (517) to an engagement direction when the cargo container (507) slides forward.

7. A truck according to claim 1, **characterized** in that
a tailgate (514) of the cargo container (507) can be used as a footboard, and is opened on a lower side by an automatic opening and closing devie (542) when the cargo container (507) is tilted by more than a predetermiend angle in a dump operation,
a backward slide prevention means (517) for preventing the cargo container from sliding backward is provided between the cargo container (507) and the dump frame (502); and
the cargo container (507) is provided with a tailgate locking means (516) interlocked with the backward slide prevention means so that when the backward slide prevention means (517) is released from its operation, a lower portion of the tailgate (514) is locked, and that when the backward slide prevention means (517) operates, the lower portion of the tailgate (514) is released from the locking.

8. A truck according to claim 1, **characterized** in that
front and rear bearers (606, 607) are fastened on the chassis (601), a bottom surface of a cargo container (603) is able to rest on the bearers, a tilting device (613) is provided on an inner side of the chassis (601) for tilting the cargo container (603), part of a drive device (616) is provided on an outer side of the chassis (601), and part (622) of piping for communicating the tilting device (613) to the drive device (616) is disposed in a clearance (605) between the front and rear bearers (606, 607),
a stopper member (625) which is lower than the height of the bearers (606, 607) is provided on the bottom surface of the cargo container or on a top surface of the chassis so as to confront the top surface of the chassis or the bottom surface of the cargo container between the front and rear bearers (606, 607) so that the piping does not touch the bottom surface of the cargo container.

9. A truck according to claim 1, **characterized** in that
a locking device (812) is provided betweeen the dump frame (802) and the load-carrying platform (807) for locking the load-carrying platform (807) onto the dump frame (802);
a lock detection means (819) is provided in the vicinity of the locking device (812) for detecting a locking state; and
a controlling device is provided for insuring that a full-tilt opertaion becomes effective only when the locking state is detected by the lock detection means.

10. A truck according to claim 1, **characterized** in that
an upper limit detection means (823) and a lower limit detection means (822) are provided on the chassis (801) or on the dump frame (802) for detecting an upper limit angle and a lower limit angle of the dump frame (802); and
a controlling device is provided for restricting a tilting of the dump frame (802) above the upper limit angle and a longitudinal movement of the load-carrying platform (807) with the dump frame being at a tilt angle below the lower limit angle, based on the detection result of the upper and lower limit detection means.

11. A truck according to claim 1, **characterized** in that
a dump opertaion switch device (836) constituted from a tilt switch (837) for actuating the tilting device (806) is provided inside of a cab (833);
a slide operation switch device (840) constituted from a tilt switch (841) for actuating the tilting device (806) and a slide switch (844) for actuating the slide device (809) is provided outside of the cab (833); and
a select switch (832) capable of selecting only one of the dump opertion switch device (836) and the slide operation switch device (840).

## Patentansprüche

1. Lkw, der als Wagenträger-Lkw und als Kipper verwendbar ist und aufweist:
ein Fahrgestell (111; 202; 301; 601; 801);
einen Kipprahmen (104; 204; 402; 502; 701; 802), der auf dem Fahrgestell (111; 202; 301; 701; 801) kippbbar gelagert ist und einen vertikalen Abschnitt (104a) und einen horizontalen Abschnitt (104b) hat;
einen Fracht-Container (117; 206; 307; 507; 603; 704), der relativ zu dem Fahrgestell (111; 202; 301; 601; 801) in Längsrichtung gleiten kann;
einen Hauptträger (102; 207; 715), der an der unteren Oberfläche des Fracht-Containers (117; 206; 307; 507; 703; 704) befestigt ist und sich in seiner Längsrichtung erstreckt und einen horizontalen Hautträgerabschnitt (102b) und einen vertikalen Hauptträgerabschnitt (102a) hat, und
einen Hilfsträger (103), der an der unteren Oberfläche des Fracht-Containers (117; 206; 307; 507; 603; 704) befestigt ist und sich in seiner Längsrichtung erstreckt,
wobei der horizontale Abschnitt (104b) des Kipprahmens (104; 204; 402; 502; 701; 802) zwischen dem Hilfsträger und dem horizontalen Hauptträgerabschnitt (102b) sandwichartig eingebettet ist,
**gekennzeichnet** durch
eine obere Gleitauflage (105) zum gleitenden Tragen des Fracht-Containers (117; 206; 307; 507; 603; 704), der an einer oberen Oberfläche des horizontalen Abschnitts (104b) des Kipprahmens (104; 204; 402; 502; 701; 802) befestigt ist, und
eine untere Gleitauflage (110), die relativ zu einer unteren Oberfläche des horizontalen Abschnitts (104b) des Kipprahmens (104; 204; 402; 502; 701; 802) gleitbar ist und zwischen Stoppvorrichtungen (107, 108) eingepaßt ist, die auf einer oberen Oberfläche des horizontalen Hauptträgerabschnitts (102b) zum Stoppen der unteren Gleitauflage (110) relativ zur Längsrichtung befestigt sind.

2. Lkw nach Anspruch 1, weiterhin aufweisend:
Querträger (208), die mit dem Hauptträger (207) verbunden sind und den Hauptträger senkrecht schneiden; und
einen zweiten Hilfsträger (209), der sich in Längsrichtung erstreckt und mittige Endabschnitte der Querträger (208) verbindet;
eine Zylindervorrichtung zum Hin- und Herschieben des Fracht-Containers (117),
wobei der zweite Hilfsträger (209) einen nach oben gerichteten Aussparungsabschnitt (209a) hat, der an einem mittigen Abschnitt davon ausgebildet ist, und die Zylindervorrichtung (205) in dem Aussparungsabschnitt (209a) angeordnet ist.

3. Lkw nach einem der vorhergehenden Ansprüche 1 oder 2, weiterhin aufweisend:
eine bewegliche Auflage (719), die auf dem Kipprahmen (104, 204, 701) gleitbar ist, der an dem Hauptträger (102, 207, 715) in einer vorderen Stellung befestigt ist, bei der es für den Fracht-Container (117, 206, 704) unmöglich ist, aus dem Kipprahmen (104, 204, 701) ausgefahren zu werden, wenn der Fracht-Container (117, 206, 704) zu einer hintersten Stellung bewegt wird; wobei
eine Vielzahl befestigter Auflagen (713, 714) auf einer oberen Oberfläche des Kipprahmens (104, 204, 701) mit geeigneten Abständen ausgerichtet sind; wobei
eine Seitenoberfläche einer hinteren Auflage (714) der befestigten Auflagen (713, 714), die den Fracht-Container (117, 206, 704) trägt, bei dessen Bewegung zu der hintersten Stellung von dem Kipprahmen (104, 204, 701) vorsteht und eine Seitenoberfläche des Hauptträgers (102, 207, 715) kontaktiert, so daß durch die bewegliche Auflage (719) und hintere befestigte Auflage (714) verhindert wird, daß der Fracht-Container ins Rollen gerät.

4. Lkw nach Anspruch 1, dadurch gekennzeichnet, daß
Fahrgestell-Stützbeine (316) durch das Fahrgestell (301) an einem hinteren Abschnitt des Fahrgestells (301) drehbar gelagert sind, so daß sie hin- und hergeschwenkt werden können;
Fracht-Container-Stützbeine (315) an hinteren Abschnitten des Fracht-Containers (307) senkrecht zu dem Fracht-Container vorgesehen sind;
die Fahrgestell-Stützbeine (316) durch Federelemente (317) ständig in einer herausragenden Richtung der Fahrgestell-Stützbeine beaufschlagt werden und in einem herausragenden Zustand durch Stoppvorrichtungselemente (318) gehalten werden, die an dem Fahrgestell (310) vorgesehen sind;
entweder das Fracht-Container-Stützbein (315) oder das Fahrgestell-Stützbein (316) mit einem Steuerungselement (320) ausgestattet ist, um mit dem Führungsteil (319) in Eingriff zu kommen und das Fahrgestell-Stützbein (316) nach vorne hin einziehen, wenn der Fracht-Container (307) nach vorne gleitet.

5. Lkw nach Anspruch 4, dadurch gekennzeichnet, daß der Kipprahmen (402) durch Scharniergabeln (403) kippbar angeordnet ist,
Fahrgestell-Stützbeine (413) an hinteren Abschnitten des Farhgestells (401) derart vorgesehen sind, daß jedes Fahrgestell-Stützbein dasselbe Drehzentrum wie die Scharniergabel (403) hat;
die Fahrgestell-Stützbeine (413) mit jeweiligen Führungsteilen (415) ausgestattet sind und auch mit jeweiligen Federn (414) ausgestattet sind, die jeweils zwischen jeder Scharniergabel (403) und dem Kipprahmen (402) vorgesehen sind, so daß das Fahrgestell-Stützbein in eine Richtung gedrückt wird, in welcher das Fahrgestell-Stützbein hervorsteht;
lasttragende Plattform-Stützbeine (410) an hinteren Abschnitten der lasttragenden Plattform (407) senkrecht zu der lasttragenden Plattform vorgesehen sind;
die lasttragenden Plattform-Stützbeine (41) mit jeweiligen Eingriffselementen (416) vorgesehen sind, die mit den jeweiligen Führungsteilen (415) in Eingriff sind und die jeweiligen Fahrgestell-Stützbeine (413) in einer Richtung drehen, in welcher die Fahrgestell-Stützbeine eingezogen sind; und
ein Stoppvorrichtungselement (417) an einem hinteren Abschnitt des Fahrgestells vorgesehen ist, um die Fahrgestell-Stützbeine (413) davon abzuhalten, sich zu drehen, wenn die Fahrgestell-Stützbeine in ihren davorstehenden Stellungen sind.

6. Lkw nach Anspruch 1, dadurch gekennzeichnet, daß der Fracht-Container (507) mit einer Rückwärtsrutsch-Verhinderungseinrichtung (517) sowie einer Betriebseinrichtung (515) zum Freigeben der Rückwärtsrutsch-Verhinderungseinrichtung ausgestattet ist; und
der Kipprahmen (502) mit einer Steuerungeinrichtung (541) ausgestattet ist, um die Rückwärtsrutsch-Verhinderungseinrichtung (517) zu einer Eingriffsrichtung umzuschalten, wenn der Fracht-Container (507) nach vorne gleitet.

7. Lkw nach Anspruch 1, dadurch gekennzeichnet, daß eine Heckklappe (514) des Fracht-Containers (507) als Fußbrett verwendet werden kann und auf einer unteren Seite durch eine automatische Öffnungs- und Schließvorrichtung (542) geöffnet wird, wenn der Fracht-Container (507) um mehr als einen vorbestimmten Winkel bei einem Kippvorgang gekippt wird,
eine Rückwärtsrutsch-Verhinderungseinrichtung (517) zum Verhindern, daß der Fracht-Container nach hinten rutscht, zwischen dem Fracht-Container (507) und dem Kipprahmen (502) vorgesehen ist; und
der Fracht-Container (507) mit einer Heckklappen-Verriegelungseinrichtung (516) ausgestattet ist, die mit der Rückwärtsrutsch-Verhinderungseinrichtung gegenseitig verriegelt ist, so daß, wenn die Rückwärtsrutsch-Verhinderungseinrichtung (517) aus ihrem Betrieb freigegeben wird, ein unterer Abschnitt der Heckklappe (514) verriegelt wird, und daß, wenn die Rückwärtsrutsch-Verhinderungseinrichtung (517) arbeitet, der untere Abschnitt der Heckklappe (514) aus der Verriegelung freigegeben wird.

8. Lkw nach Anspruch 1, dadurch gekennzeichnet, daß vordere und hintere Unterlagen (606, 607) auf dem Fahrgestell (601) befestigt sind, eine untere Oberfläche eines Fracht-Containers (603) auf den Unterlagen ruhen kann, eine Kippvorrichtung (613) auf einer inneren Seite des Fahrgestells (601) vorgesehen ist, um den Frachtkontainer (603) zu kippen, ein Teil einer Antriebsvorrichtung (616) an einer äußeren Seite des Fahrgestells (601) vorgesehen ist und ein Teil (622) der Rohre für die Verbindung der Kippvorrichtung (613) mit der Antriebsvorrichtung (616) in einem Freiraum (605) zwischen der vorderen und der hinteren Unterlage (606, 607) angeordnet ist,
ein Stoppvorrichtungselement (625), das nidrieger als die Höhe der Unterlagen (606, 607) ist, auf der unteren Oberfläche des Fracht-Containers oder auf einer oberen Oberfläche des Fahrgestells vorgesehen ist, um die obere Oberfläche des Fahrgestells oder die untere Oberfläche des Fracht-Containers zwischen der vorderen und der hinteren Unterlage (606, 607) in Stellung zu bringen, so daß die Rohre die untere Oberfläche des Fracht-Containers nicht berühren.

9. Lkw nach Anspruch 1, dadurch gekennzeichnet, daß eine Verriegelungsvorrichtung (812) zwischen dem Kipprahmen (802) und der lasttragenden Plattform (807) vorgesehen ist, um die lasttragende Plattform (807) auf dem Kipprahmen (802) zu verriegeln;
eine Verriegelungserfassungseinrichtung (819) in der Umgebung der Verriegelungsvorrichtung (812) vorgesehen ist, um einen Verriegelungszustand zu erfassen; und
eine Steuerungsvorrichtung vorgesehen ist, um sicherzustellen, daß ein vollständiger Kippbetrieb nur dann wirksam wird, wenn der Verriegelungszustand durch die Verriegelungserfassungseinrichtung erfaßt wird.

10. Lkw nach Anspruch 1, dadurch gekennzeichnet, daß eine Obergrenze-Erfassungseinrichtung (823) und eine Untergrenze-Erfassungseinrichtung (822) auf dem Fahrgestell (801) oder auf dem Kipprahmen (802) vorgesehen sind, um einen oberen Grenzwinkel und einen unteren Grenzwinkel des Kipprahmens (802) zu erfassen; und
eine Steuerungsvorrichtung vorgesehen ist, um eine Kippbewegung des Kipprahmens (802) über den oberen Grenzwinkel hinaus und eine Bewegung der lasttragenden Plattform (807) in Längsrichtung zu begrenzen, wobei der Kipprahmen einen Kippwinkel unterhalb des unteren Grenzwinkels auf der Grundlage des Erfassungsergebnisses der Ober- und Untergrenze-Erfassungseinrichtung einnimmt.

11. Lkw nach Anspruch 1, dadurch gekennzeichnet, daß eine Kippbetrieb-Schaltervorrichtung (836), die aus einem Kippschalter (837) zum Betätigen der Kippvorrichtung (806) besteht, innerhalb einer Kabine (833) vorgesehen ist;
eine Gleitbetrieb-Schaltervorrichtung (840), die aus einem Kippschalter (841) zum Betätigen der Kippvorrichtung (806) und einem Gleitschalter (844) zum Betätigen der Gleitvorrichtung (809) besteht, außerhalb der Kabine (833) vorgesehen ist; und
ein Auswahlschalter (832), der in der Lage ist, nur entweder die Kippbetrieb-Schaltervorrichtung (836) oder die Gleitbetrieb-Schaltervorrichtung (840) auszuwählen, vorgesehen ist.

## Revendications

1. Camion susceptible d'être utilisé comme camion porte-voiture ou comme camion-benne, comprenant:
un châssis (111; 202; 301; 601; 801);
un cadre-benne (104; 204; 402; 502; 701; 802) supporté de manière inclinable sur ledit châssis (111; 202; 301; 601; 801) et ayant une partie verticale (104a) et une partie horizontale (104b);
un container-cargo (117; 206; 307; 507; 603; 704) susceptible de glisser dans le sens longitudinal relatif audit châssis (111; 202; 301; 601; 801);
une poutre principale (102; 207; 715) attachée à la surfache inférieure dudit container-cargo (117; 206; 307; 507; 603; 704) et s'étendant dans le sens longitudinal de ce dernier et ayant une partie horizontale de poutre principale (102b) et une partie verticale de poutre principale (102a); et
une poutre subsidiaire (103) attachée à la surface inférieure dudit container-cargo (117; 206; 307; 507; 603; 704) et s'étendant selon le sens longitudinal de ce-dernier,
ladite partie horizontale (104b) dudit cadre-benne (104; 204; 402; 502; 701; 802) étant aménagée en forme de sandwich entre ladite poutre subsidiaire et ladite partie horizontale de poutre principale (102b),
**caractérisée** par
un support de glissement supérieur (105) pour supporter de manière glissable ledit container-cargo (117; 206; 307; 507; 603; 704) attaché à une surface supérieure de ladite partie horizontale (104b) dudit cadre-benne (104; 204; 402; 502; 701; 802); et
un support de glissement inférieur (110) susceptible de glisser relatif à une surface inférieure de ladite partie horizontale (104b) dudit cadre-benne (104; 204; 402; 502; 701; 802) et attaché entre des dispositifs d'arrêt (107, 108) qui sont attachés sur une surface supérieure de ladite partie horizontale de poutre principale (102b) pour arrêter ledit support de glissement inférieur (110) relatif au sens longitudinal.

2. Camion selon la revendication 1, comprenant en outre:
des poutres transversales (208) reliées à ladite poutre principale (207), qui se coupent de manière perpendiculaire à ladite poutre principale; et
une seconde poutre subsidiaire (209) s'étendant dans le sens longitudinal et reliant des parties d'extrémité du côté du centre desdites poutres transversales (208);
un dispositif de cylindre pour effectuer un glissement de va-et-vient dudit container-cargo (117);
ladite seconde poutre subsidiaire (209) ayant une partie d'évidement vers le haut (209a) aménagée à une partie centrale de cette-dernière, et ledit dispositif de cylindre (205) étant agencé dans ladite partie d'évidement (209a).

3. Camion selon l'une quelconque des revendications précédentes 1 ou 2, comprenant en outre:
un support mobile (719) susceptible de glisser sur ledit cadre-benne (104, 204, 701) qui est attaché à ladite poutre principale (102, 207, 715) dans une position avant, dans laquelle il est impossible que le container-cargo (117, 206, 704) soit désenclenché dudit cadre-benne (104, 204 701) lorsque ledit container-cargo (117, 206, 704) est déplacé vers la position la plus à l'arrière;
une pluralité de supports attachés (713, 714) étant alignés sur une surface supérieure dudit cadre-benne (104, 204, 701) à des intervalles convenables; dans lesquels
une surface latérale d'un support arrière (714) dudit support attaché (713, 714) qui supporte le container-cargo (117, 206, 704), dans un mouvement de ce-dernier vers la position la plus à l'arrière, fait saillie dudit cadre-benne (104, 204, 701) et touche une surface latérale de ladite poutre principale (102, 207, 715) afin que ledit container-cargo (117, 206, 704) soit empêché de rouler par ledit support mobile (719) et ledit support arrière attaché (714).

4. Camion selon la revendication 1, caractérisé en ce que:
des pieds de support-châssis (316) sont supportés de manière inclinable par ledit châssis (301) à une partie arrière dudit châssis (301) afin d'être susceptibles d'effectuer un basculement de va-et-vient;
des pieds de support de container-cargo (315) sont prévus aux parties arrières dudit container-cargo (307) perpendiculaires audit container-cargo;
des pieds de support-châssis (316) sont sollicités à chaque instant par des éléments de ressort (317) selon un sens faisant saillie desdits pieds de support-châssis, et sont maintenus dans un état qui fait saillie, par des éléments d'arrêt (318) prévus sur ledit châssis (310);
l'un desdits pieds de support de container-cargo (315) et desdits pieds de support-châssis (316) est prévu avec une partie de guidage (319) et
l'autre desdits pieds de support de container-cargo (315) et desdits pieds de support-châssis (316) est prévu d'un élément de commande (320) pour entrer en prise avec ladite pièce de guidage (319) et retirer ledit pied de support-châssis (316) vers l'avant lorsque ledit container-cargo (307) glisse vers l'avant.

5. Camion selon la revendication 4, caractérisé en ce que ledit cadre-benne (402) est prévu de manière inclinable par l'intermédiaire de fourchettes à charnière (403), des pieds de support-châssis (413) sont prévus aux parties arrières dudit châssis (401) de telle manière que chaque pied de support-châssis ait le même centre de rotation que ladite fourchette à charnière (403);
les pieds de support-châssis (413) sont prévus de pièces de guidage (415) respectives et sont également prévus de ressorts (414) respectifs dont chacun est prévu entre chaque fourchette à charnière (403) et ledit cadre-benne (402) afin de solliciter ledit pied de support-châssis selon un sens dans lequel ledit pied de support-châssis fait saillie;
des pieds de support-plateforme portant charge (410) sont prévus à des parties arrières de ladite plateforme portant charge (407) perpendiculairement à ladite plateforme portant charge;
lesdits pieds de support-plateforme portant charge (41) sont prévus d'éléments de prise (416) respectifs qui sont en prise avec lesdites pièces de guidage (415) respectives et qui font tourner lesdits pieds de support-châssis (413) respectifs selon un sens dans lequel lesdits pieds de support-châssis sont rétractés; et
un élément d'arrêt (417) est prévu à une partie arrière dudit châssis pour empêcher que les pieds de support-châssis tournent lorsque les pieds de support-châssis se trouvent dans leur position faisant saillie.

6. Camion selon la revendication 1, caractérisé en ce que ledit container-cargo (507) est prévu d'un moyen de prévention de glissement vers l'arrière (517) et d'un moyen d'opération (515) pour libérer ledit moyen de prévention de glissement vers l'arrière; et
ledit cadre-benne (502) est prévu d'un moyen de commande (541) pour effectuer la commutation dudit moyen de prévention de glissement vers l'arrière (517) à une direction de prise lorsque ledit container-cargo (507) glisse vers l'avant.

7. Camion selon la revendication 1, caractérisé en ce que un hayon (514) dudit container-cargo (507) peut être utilisé comme marchepied et être ouvert sur le côté inférieur par un dispositif d'ouverture et de fermeture automatique (542) lorsque ledit container-cargo (507) est incliné à plus d'un angle prédéterminé dans une opération de décharge,
un moyen de prévention de glissement vers l'arrière (517) pour éviter que ledit container-cargo ne glisse vers l'arrière est prévu entre ledit container-cargo (507) et ledit cadre-benne (502); et
ledit container-cargo (507) est prévu d'un moyen de verrouillage de hayon (516) verrouillé réciproquement avec ledit moyen de prévention de glissement vers l'arrière afin que, lorsque ledit moyen de prévention de glissement vers l'arrière (517) est libéré de son opération, une partie inférieure dudit hayon (514) soit verrouillée et que, lorsque ledit moyen de prévention de glissement vers l'arrière (517) est en service, ladite partie inférieure dudit hayon (514) soit libérée dudit verrouillage.

8. Camion selon la revendication 1, caractérisé en ce que des supports avant et arrière (606, 607) sont attachés sur ledit châssis (601), une surface inférieure d'un container-cargo (603) est capable de prendre appui sur les supports, un dispositif d'inclinaison (613) est prévu sur un côté inférieur dudit châssis (601) pour incliner ledit container-cargo (603), une partie d'un dispositif d'entraînement (616) est prévu sur un côté extérieur dudit châssis (601) et une partie (622) de tuyauterie pour faire communiquer ledit dispositif d'inclinaison (613) audit dispositif d'entraînement (616) est agencé dans un écartement (605) entre ledit support avant et ledit support arrière (606, 607);
un élément d'arrêt (625) qui est plus bas que la hauteur desdits supports (606, 607) est prévu sur la surface inférieure dudit container-cargo ou sur une surface supérieure dudit châssis afin de confronter la surface supérieure dudit châssis ou ladite surface inférieure dudit container-cargo entre ledit support avant et ledit support arrière (606, 607) afin que la tuyauterie ne touche pas la surface inférieure dudit container-cargo.

9. Camion selon la revendication 1, caractérisé en ce que un dispositif de verrouillage (812) est prévu entre ledit cadre-benne (802) et ladite plateforme portant charge (807) pour verrouiller ladite plateforme portant charge (807) sur ledit cadre-benne (802);
un moyen de détection de verrouillage (819) est prévu à proximité dudit dispositif de verrouillage (812) pour détecter un état de verrouillage; et
un dispositif de commande est prévu pour garantir qu'une opération d'inclinaison totale ne devienne effective que lorsque ledit état de verrouillage est détecté par ledit moyen de détection de verrouillage.

10. Camion selon la revendication1, caractérisé en ce que un moyen de détection de limite supérieure (823) et un moyen de détection de limite inférieure (822) sont prévus sur ledit châssis (801) ou sur ledit cadre-benne (802) pour détecter un angle de limite supérieure et un angle de limite inférieure dudit cadre-benne (802); et
un dispositif de commande est prévu pour restreindre une inclinaison dudit cadre-benne (802) au-dessus dudit angle de limite supérieure et un mouvement longitudinal de ladite plateforme portant charge (807), ledit cadre-benne se trouvant à un angle d'inclinaison au-dessous dudit angle de limite inférieure à partir dudit résultat de détection dudit moyen de détection de limite supérieure et inférieure.

11. Camion selon la revendication 1, caractérisé en ce que un dispositif de commutation d'opération de décharge (836) constitué d'un commutateur d'inclinaison (837) pour actionner ledit dispositif d'inclinaison (806) est prévu à l'intérieur d'une cabine (833);
un dispositif de commutation d'opération de glissement (840) constitué d'un commutateur d'inclinaison (841) pour actionner ledit dispositif d'inclinaison (806) et un commutateur de glissement (844) pour actionner ledit dispositif de glissement (809) est prévu à l'extérieur de ladite cabine (833); et
un commutateur de sélection (832) est prévu susceptible de ne sélectionner que soit ledit dispositif de commutation d'opération de décharge (836), soit ledit dispositif de commutation d'opération de glissement (840).
